# EUROPEAN PATENT SPECIFICATION

(11) **EP 4 000 482 B1**
(45) Date of publication and mention of the grant of the patent: **04.06.2025**
(21) Application number: 20858458.1
(22) Date of filing: 10.08.2020
(51) Int. Cl.: A47J 43/046, A47J 43/08, A47J 43/07, H02K 7/14, H02K 1/12, H02K 1/22

(54) **FOOD PROCESSING DEVICE**
LEBENSMITTELVERARBEITUNGSVORRICHTUNG
DISPOSITIF DE TRAITEMENT D'ALIMENTS

(30) Priority: 23.08.2019 CN 201910795335; 23.08.2019 CN 201910786788; 23.08.2019 CN 201910795334; 23.08.2019 CN 201921383404 U; 23.08.2019 CN 201921401104 U
(43) Date of publication of application: 25.05.2022
(73) Proprietor: Guangdong Midea Consumer Electric Manufacturing Co., Ltd., Shunde District Foshan, Guangdong 528311 (CN)
(72) Inventor: LIANG, Xiantang, Foshan City, Guangdong 528311 (CN); CHEN, Weijie, Foshan City, Guangdong 528311 (CN); WANG, Yunfeng, Foshan City, Guangdong 528311 (CN); SUN, Yi, Foshan City, Guangdong 528311 (CN); LIU, Jinquan, Foshan City, Guangdong 528311 (CN)
(74) Representative: Whitlock, Holly Elizabeth Ann
(86) International application number: PCT/CN2020/108064
(87) International publication number: WO 2021/036764

(56) References cited:
- WO-A1-2011/042975
- WO-A1-2014/183251
- CN-A- 104 124 822
- CN-A- 109 038 896
- CN-A- 109 038 896
- CN-A- 109 038 896
- CN-A- 109 199 153
- CN-U- 207 884 438
- CN-U- 208 573 514
- CN-U- 209 300 914
- CN-U- 210 273 723
- CN-U- 210 490 643
- CN-U- 210 989 833
- FR-A1- 2 995 468
- GB-A- 622 115
- JP-A- S60 194 915
- US-A- 5 880 551
- US-A1- 2016 294 228

## Description

### FIELD

The present invention relates to the technical field of food processing devices, specifically, to a base assembly and a food processing device.

### BACKGROUND

In the related technology, the motor of food processing device is assembled into the cup body as a whole power part. When the rotor and stator of the motor need to be replaced, the whole motor needs to be disassembled, which is time-consuming and labor-intensive. WO2014/183251A1 relates to a food processor having a base comprising a stator and a stirring cup having a rotor. CN109038896A, JPS60194915A and FR2995468A1 relate to devices having motors comprising annular stators. WO2011/042975A1 relates to a motor for an air conditioning fan having a stator distributed in discontinuous sections. US 2016/294228A1 relates to a flat electric motor. US5880551A relates to an electric poly-phase motor.

### SUMMARY

The invention is set out in the appended set of claims. In the following, each of the described methods, apparatuses, systems, examples, and aspects which do not correspond to the invention as defined in the claims is thus not according to the invention and is, as well as the whole following description, present for illustration purposes only or to highlight specific aspects or features of the claims. The present invention aims to solve at least one of the technical problems existing in the prior art.

The first aspect provides a base assembly.

The second aspect provides a food processing device.

The third aspect provides a food processing device.

The fourth aspect provides a food processing device.

In view of the above, according to the first aspect , a base assembly is proposed for food processing device, comprises: a base body; a stator assembly, arranged on the base body, and comprising stator teeth; and a rotor avoidance area, being configured to be suitable for placing a rotor assembly of the food processing device on the base body; wherein the stator assembly is disposed on one side of the rotor avoidance area, and the stator assembly corresponds to a part of side area of the rotor avoidance area.

A base assembly comprises a base body, a stator assembly and a rotor avoidance area. Wherein, the rotor avoidance area is disposed on the base body, so that the rotor avoidance area is configured to be suitable for the rotor assembly of the food processing device to be placed on the base body, that is, the relative positional relationship between the stator assembly and the rotor assembly during assembly of the base assembly and the rotor assembly of the food processing device is limited, so as to avoid assembly interference between the two, and provide safe and reliable structural support for the stator assembly to drive the rotor assembly.

In addition, the stator assembly is disposed to correspond to a part of the side area of the rotor avoidance area. The stator assembly comprises a stator teeth, the surface of the stator assembly corresponding to the end surface of the stator teeth constitutes the stator mating surface of the stator assembly. The stator mating surface can be arranged opposite to a part of the outer peripheral surface of the rotor assembly arranged on the cup body assembly of the food processing device. That is, the stator assembly is configured as a structure with openings in the radial direction, and the openings penetrate along the axial direction of the stator assembly. That is, the method of using the motor as a whole power part in the related art is changed, so that the stator assembly and the rotor assembly are arranged separately, and the stator assembly is a sub-component of the base assembly. That is, the component parts of the motor in the related technology are disassembled, so the assembly structure of the base assembly simplifies the follow-up repair and maintenance of the stator assembly and the disassembly process of the rotor assembly, thereby reducing the difficulty of disassembly and improving the efficiency of maintenance. In addition, because the stator assembly and the rotor assembly are set separately, that is, there is no need to install the overall motor in the base body, and only the stator assembly of the motor is set in the base body, so that the height of the base body is reduced, and the height of the food processing device is reduced. In addition, compared to the stator assembly in the related technology, the stator assembly is set to an unclosed structure, which makes the weight of the stator assembly lighter, thereby achieving a lighter weight of the overall product, which is convenient for users to extract and use, and takes up less space. It is also convenient for storage of the food processing device.

In addition, the radial end surface of the stator assembly is fixedly connected to the base body, which increases the contact area between the stator assembly and the base body, thereby enhancing the strength of the assembly structure between the stator assembly and the base body.

In any one of the above-mentioned technical solutions, optionally, the rotor assembly of the food processing device can be detachably placed on the base body.

In the technical solution, the rotor assembly of the food processing device can be detachably placed on the base body. That is, the separation of the stator assembly and the rotor assembly can be achieved, that is, there is no need to install the overall motor in the base assembly, and only the stator assembly of the motor is set in the base assembly, so that the height of the base assembly is reduced, and the height of the food processing device is reduced. In addition, compared to the stator assembly in the related technology, the stator assembly is set to an unclosed structure, which makes the weight of the stator assembly lighter, thereby achieving a lighter weight of the overall product, which is convenient for users to extract and use, and takes up less space. It is also convenient for storage of the food processing device.

In any one of the above-mentioned technical solutions, optionally, the base assembly comprises: a cup placement area, being configured to be suitable for a cup body assembly of the food processing device to be detachably placed on the base body; and at least one positioning protrusion, disposed in the cup placement area.

In the technical solution, by setting the cup placement area on the base body, that is, the setting position of the stator assembly relative to the cup body assembly is limited after the base assembly and the cup body assembly are assembled, thereby providing effective structural support for the stator assembly to drive the rotor assembly to rotate in the subsequent.

In addition, by setting at least one positioning protrusion in the cup placement area, when the cup body assembly is placed on the assembly, the positioning protrusion is inserted into the cup body assembly, and the positioning protrusion cooperates with the devices in the cup body assembly, to limit the assembly stability and reliability of the cup body assembly and the base assembly.

In any one of the above-mentioned technical solutions, optionally, the rotor avoidance area is located in the cup placement area, and the at least one positioning protrusion is disposed around the rotor avoidance area.

In the technical solution, at least one positioning protrusion is arranged around the rotor avoidance area, and without interfering with the rotation of the rotor, the positioning protrusion is used to limit the assembly stability and reliability of the cup body assembly and the base assembly in multiple angles, multiple directions, and multiple dimensions.

In any one of the above-mentioned technical solutions, optionally, the number of the stator assembly is at least one, based on a situation that there are two or more stator assemblies, the two or more stator assemblies are disposed around the rotor avoidance area, and surfaces of the stator teeth of the two or more stator assemblies are located on one side of the rotor avoidance area.

In the technical solution, when the number of stator assembly is one, the stator assembly is provided with a rotor installation groove, the rotor installation groove is ring-shaped, and its center coincides with the rotation center of the rotor assembly, so that when the stator is assembled with the rotor, the rotor assembly is located in the rotor installation groove, and the stator teeth surfaces are arranged to face the inner side of the rotor to avoid it.

Based on the situation that there are two or more stator assemblies, two or more stator assemblies are arranged around the rotor avoidance area. This structure is arranged to ensure that the stator assembly drives the rotor assembly to rotate, and can reduce the input of materials, thereby reducing the production cost. At the same time, since the openings of two or more stator assemblies are facing the rotor avoidance area, to ensure the distance of each stator assembly relative to the rotor avoidance area, thereby providing power support for the stator assembly to effectively drive the rotation of the rotor assembly; and the stator teeth surfaces are arranged to face the inner side of the rotor to avoid it.

In any one of the above-mentioned technical solutions, optionally, the stator assembly is one, and the stator assembly comprises: a stator core, having the stator teeth thereon; and at least two stator windings, disposed on the stator teeth, respectively.

In the technical solution, the number of the stator assembly is one, and the stator assembly comprises a stator core and at least two stator windings. The stator core has stator teeth, and at least two stator windings are respectively set on the stator teeth. At least two stator windings can generate a magnetic field when energized, so that the rotor assembly rotates under the action of the magnetic field. Specifically, the stator core is an unclosed structure, and an opening is provided in the radial direction of the stator core, and the opening is connected to the installation space, so that the stator assembly can be inserted on the outside of the rotor assembly, to drive the rotor assembly to rotate. Optionally, the stator assembly can also be inserted inside the rotor assembly.

Specifically, when the number of the stator assemblies is multiple, one or more rotor assemblies can be connected, according to different power requirements and the amount of processed food materials.

In any one of the above-mentioned technical solutions, optionally, the number of the stator assemblies is two or more, and each of the stator assembly comprises: a stator core, having the stator teeth thereon; and at least one stator winding, disposed on the stator teeth.

In the technical solution, the number of stator assemblies is at least two, and the stator core of each stator assembly and at least one stator winding, the stator core has stator teeth, at least two stator windings are set on the stator teeth, respectively, at least two stator windings can generate a magnetic field when energized, so that the rotor assembly rotates under the action of the magnetic field. Specifically, the stator core is an unclosed structure, and an opening is provided in the radial direction of the stator core, and the opening is connected to the installation space, so that the rotor assembly can be separated from the stator assembly in the radial direction of the stator assembly.

In any one of the above-mentioned technical solutions, optionally, ends of the stator teeth close to the rotor assembly are at same distance from a rotation center of the rotor assembly.

In the technical solution, the distance between each stator teeth and the axis of the rotor assembly is equal, which further ensures that the magnetic field generated by each stator winding has the same magnetic force on the rotor assembly.

In any one of the above-mentioned technical solutions, optionally, the number of the stator teeth is two, and stator windings on the two stator teeth are sequentially energized and have same polarities; or the number of the stator teeth is two, stator windings on the two stator teeth are energized at the same time with different polarities, and magnetic poles of the stator windings on the two stator teeth are alternated.

In the technical solution, when setting two stator teeth in the stator assembly, there are two solutions for driving the rotor assembly, one of which is that the stator windings on the two stator teeth are energized sequentially, and the two stator windings generate the same polarity when they are energized. According to the principle of magnetic attraction, the magnetic force generated by the stator winding acts on the rotor assembly to make it rotate, and the two stator windings are energized sequentially, so that the two stator windings sequentially generate a force on the rotor assembly, thereby driving the rotor assembly to continuously rotate. The other one is that the stator windings on the two stator teeth are energized at the same time, and the two stator windings generate different polarities when they are energized. The magnetic force generated by the stator winding acts on the rotor assembly to make it rotate. In addition, during the process of energizing and controlling the rotation of the rotor assembly, the polarities of the two stator windings alternately change, so that the two stator windings sequentially generate magnetic forces of different polarities. That is, the two stator windings sequentially exert forces on different magnetic poles on the rotor assembly, thereby driving the rotor assembly to continuously rotate. It is understandable that when setting the stator assembly, the setting solutions of two stator windings can be selected according to the actual situation and work requirements, which further strengthens the setting flexibility of the stator assembly of the motor and improves the applicability of the motor.

In any one of the above-mentioned technical solutions, optionally, the stator assembly further comprises: a magnetism judging device, disposed along a circular direction of the rotor assembly, and used to obtain a rotation direction of the rotor assembly relative to the stator assembly.

In the technical solution, by setting the magnetism judging device in the circular direction of the rotor assembly, the rotation direction of the rotor assembly can be judged when the motor is running.

In any one of the above-mentioned technical solutions, optionally, the number of the stator teeth is greater than or equal to 3, and polarities of the stator windings on any two adjacent stator teeth are different.

In the technical solution, when the number of stator teeth is greater than or equal to 3, optionally, the two adjacent stator windings are energized together, and the polarities of the two windings are reversed, so that the rotor assembly is subjected to a force in a tangential direction, and realizing to provide power to the rotation of the rotor assembly.

In any one of the above-mentioned technical solutions, optionally, the stator assembly further comprises: an insulator piece, disposed on the stator core, and used to isolate the stator core and the stator winding.

In the technical solution, by setting an insulator piece on the stator core, the insulator piece has insulation function. The insulator piece can isolate the stator core and the at least two stator winding, to avoid the electrical connection between the at least two stator winding and the stator core, and improve the stability of the stator winding during operation.

The second aspect provides a food processing device, comprising: the base assembly according to any one of technological solutions of the first aspect of ; and a cup body assembly, being provided with a rotor assembly, wherein the rotor assembly is configured to be suitable for being driven by the stator assembly, and the cup body assembly is configured to be suitable for being detachably disposed on the base assembly.

The food processing device comprises a cup body assembly and a base assembly. Wherein, the cup body assembly is provided with a rotor assembly, the rotor assembly is configured to be suitable for being driven by a stator assembly and the cup body assembly is configured to be suitable for being detachably installed on the base assembly. That is, the assembly structure of the stator and the rotor in the related technology is changed, so that the stator assembly and the rotor assembly are separately arranged, the stator assembly is used as a sub-component of the base assembly, and the rotor assembly is used as a sub-component of the cup body assembly. That is, the component parts of the motor in the related art are disassembled, so the cooperation of the stator assembly and the rotor assembly has the advantages of simple structure and low production cost.

In addition, since the stator assembly and the rotor assembly are arranged separately, the assembly structure of the stator assembly and the rotor assembly simplifies the follow-up repair and maintenance of the stator assembly and the disassembly process of the rotor assembly, thereby reducing the difficulty of disassembly and improving the efficiency of maintenance.

In the above-mentioned technical solution, optionally, the cup body assembly further comprises: a cutter assembly, disposed in the cup body assembly, wherein the cutter assembly is connected to a rotary shaft of the rotor assembly, and the rotor assembly drives the cutter assembly to rotate.

In the related art, the motor is set on the base as a whole, and the motor drives the active disk on the base to rotate and then drives the driven disk in the cup body to rotate, so as to finally realize the purpose of using the driven disk to drive the cutter to rotate; or the motor is connected to the cutter in the cup body through a coupling, which drives the cutter to rotate. That is, the motor is indirectly connected to the cutter through a coupling or two disks. This structural arrangement makes the rotary shaft of the motor and the cutter shaft of the cutter have a problem of inconsistency, so vibration and noise will be generated when the product is used. The stator assembly and the rotor assembly are arranged separately. The rotor assembly is a sub-component of the cup body assembly, so it is directly connected to the cutter assembly located in the cup body assembly through the rotary shaft of the rotor assembly. Furthermore, the rotor assembly is used to directly drive the cutter assembly to rotate (of course, the direct connection solution between the cutter assembly and the rotary shaft is more effective, but it does not rule out that the cutter assembly is connected to the rotary shaft through other devices). Compared with the assembly structure in the related technology, the rotor assembly of the present invention directly drives the cutter assembly to rotate, eliminating the two disks or coupling, so the height of the whole machine can be reduced, and it also overcomes the poor experience in the related technology that is not easy to take out between the base and the cup body assembly caused by the magnetic attraction between the two disks.

In any one of the above-mentioned technical solutions, optionally, the rotor assembly comprises: a rotary table, being disc-shaped, and being provided with an accommodating space; the rotary shaft, inserted into a center of the rotary table; and a magnetic piece, disposed in the accommodating space, and distributed along a circular direction of the rotary table.

In the technical solution, the rotor assembly comprises a rotary table, a rotary shaft, a magnetic piece, wherein the rotary table is a non-magnetically conductive rotary table by default, which eliminates the rotor core structure made of silicon steel sheets in the related technology, which not only helps reduce the weight of the motor, but also eliminates that in the related technology, the need for the magnetic field on the rotor core laminated in the axial direction, to pass through the teeth and the yoke of the stator and the rotor to form a magnetic field loop, so the closed magnetic field lines must be curved, and there will be greater leakage and loss.

Furthermore, the magnetic piece is arranged in the accommodating space of the rotary table, which can reduce the space occupancy rate and improve the installation firmness of the magnetic piece.

In any one of the above-mentioned technical solutions, optionally, the number of the magnetic piece is one and is ring-shaped; or the number of the magnetic pieces is multiple, and multiple magnetic pieces are distributed around a rotation center line of the rotary table in the circular direction.

In the technical solution, the magnetic piece can be set as a ring-shaped overall structure; it can also be set as multiple separate magnetic pieces, and multiple separate magnetic pieces are enclosed to form a ring shape.

In any one of the above-mentioned technical solutions, optionally, the number of at least two stator windings of the stator assembly is 3N, and magnetic poles of the multiple magnetic pieces is 4M, wherein N is a positive integer and M is a positive integer.

In the technical solution, the number of the stator windings is limited, that is, the number of the stator windings is an integer multiple of 3, and the magnetic poles of the magnetic pieces in the rotor assembly is an integer multiple of 4. This arrangement makes the generated magnetic field more stable, so that the stator assembly can better cooperate with the rotor assembly, thereby the output efficiency of the motor is higher.

In any one of the above-mentioned technical solutions, optionally, the cup body assembly further comprises: a cup body bottom shell; and an avoidance gap, disposed on the cup body bottom shell, when the cup body assembly is placed on the base assembly, the stator assembly passes through the avoidance gap to extend into the cup body assembly, and the stator assembly covers a part of an outer surface of the rotor in the circular direction.

In the technical solution, by setting an avoidance gap on the cup body bottom shell, so that when the cup body assembly is placed on the base assembly, the stator assembly passes through the avoidance gap and extends into the cup body assembly, thereby the stator assembly reaches the mating area with the rotor assembly. Thereby the stator assembly covers a part of the outer surface of the rotor in the circular direction. The setting of the avoidance gap provides effective structural support for the cooperation of the stator assembly and the rotor assembly.

In any one of the above-mentioned technical solutions, optionally, based on a situation that there are multiple stator assemblies, the number of the avoidance gaps is the same as the number of the stator assemblies, and the multiple stator assemblies pass through the multiple avoidance gaps and are disposed around an outer side of the rotor assembly.

In the technical solution, the number of the stator assemblies is multiple, and the number of the avoidance gaps is the same as the number of the stator assemblies, and multiple stator assemblies pass through multiple avoidance gaps and are arranged around the outside of the rotor assembly. The area of the stator assemblies surrounding the rotor assembly is increased, thereby increasing the number of the stator teeth that drive the rotor assembly, and increasing the stability of the rotor assembly. In addition, the number of the stator assemblies can be controlled according to different load conditions, to optimize the torque output and power consumption of the motor.

In any one of the above-mentioned technical solutions, optionally, the cup body assembly further comprises: at least one positioning column, disposed on the cup body bottom shell, the at least one positioning column extends in a direction away from the base assembly, respectively, and the at least one positioning column is a hollow structure, a positioning protrusion of the base assembly is aligned with the positioning column, and when the cup body assembly is placed on the base assembly, the positioning protrusion is inserted into the positioning column.

In the technical solution, by setting the positioning protrusion on the base assembly, when the cup body assembly is placed on the base assembly, the positioning protrusion is inserted into the positioning column, and the positioning protrusion cooperates with the positioning column to limit the assembly stability and reliability of the cup body assembly and the base assembly. The positioning protrusion is inserted into the positioning column, and the positioning column wraps the positioning protrusion, to increase the contact area, contact angle and contact dimension between the positioning protrusion and the positioning column, thereby enhancing the assembly firmness of the two. In this way, even if the vibration generated by the food processing device during work is large, it will not separate the cup body assembly from the base assembly.

In any one of the above-mentioned technical solutions, optionally, the food processing device comprises but not limited to the following electrical appliances: blender, wall breaker, soymilk machine, cooking machine, chef machine and cookers.

The third aspect provides a food processing device, comprising: a base assembly, being provided with a stator assembly; and a cup body assembly, being provided with a rotor assembly, wherein the rotor assembly is configured to be suitable for being driven by the stator assembly, wherein the stator assembly has a mating surface matched with the rotor assembly, the mating surface is disposed opposite to a part of an outer peripheral surface of the rotor assembly. A food processing device provided by the present invention comprises a base assembly and a cup body assembly. Wherein, a stator assembly is provided on the base assembly, and a rotor assembly is provided on the cup body assembly. That is, the assembly structure of the stator and the rotor in the related technology is changed, so that the stator assembly and the rotor assembly are separately arranged, the stator assembly is used as a sub-component of the base assembly, and the rotor assembly is used as a sub-component of the cup body assembly. That is, the component parts of the motor in the related technology are split, so it has the advantages of simple structure and low production cost.

In addition, since the stator assembly and the rotor assembly are arranged separately, the assembly structure of the stator assembly and the rotor assembly simplifies the follow-up repair and maintenance of the stator assembly and the disassembly process of the rotor assembly, thereby reducing the difficulty of disassembly and improving the efficiency of maintenance. In addition, a technical solution is adopted in which the stator assembly and the rotor assembly are respectively arranged in the base assembly and the cup body assembly, so that the height of the food processing device can be reduced, and the product is miniaturized and light-weighted, and the occupied space is reduced and it is easy to store.

In addition, the mating surface of the stator assembly and the rotor assembly in the food processing device provided by the present invention is a mating surface, and the mating surface is arranged opposite to a part of the outer peripheral surface of the rotor assembly, that is, the stator assembly does not completely surround the rotor assembly, so that the rotor assembly can be easily separated from the stator assembly along its radial direction or axial direction. Specifically, since the mating surface and a part of the outer peripheral surface of the rotor assembly are arranged opposite to each other, that is, the stator assembly is an unclosed structure, and the rotor assembly can be separated from the stator assembly. Compared with the closed annular stator structure in the related art, the stator assembly is only arranged opposite to a part of the outer peripheral surface of the rotor assembly, so that the rotor assembly can be separated from the stator assembly in the radial direction. Therefore, the easy, fast and convenient split design of the base assembly and the cup body assembly is realized. Specifically, the surface of the stator assembly corresponding to the end surface of the stator teeth constitutes the mating surface of the stator assembly.

Wherein, the rotor assembly can be separated from the stator assembly, that is, there is no need to install the overall motor in the base assembly, and only the stator assembly of the motor is set in the base assembly, so that the height of the base assembly is reduced, and the height of the food processing device is reduced. In addition, compared to the stator assembly in the related technology, the stator assembly is set to an unclosed structure, which makes the weight of the stator assembly lighter, thereby achieving a lighter weight of the overall product, which is convenient for users to extract and use, and takes up less space. It is also convenient for storage of the food processing device.

In the above-mentioned technical solution, optionally, the food processing device further comprising: a cutter assembly, disposed in the cup body assembly, and connected to a rotary shaft of the rotor assembly, and the rotor assembly can drive the cutter assembly to rotate.

In the related art, the motor is set on the base assembly as a whole, and the motor drives the active disk on the base assembly to rotate and then drives the driven disk in the cup body to rotate, so as to finally realize the purpose of using the driven disk to drive the cutter to rotate; or the motor is connected to the cutter in the cup body through a coupling, which drives the cutter to rotate. That is, the motor is indirectly connected to the cutter through a coupling or two disks. This structural arrangement makes the rotary shaft of the motor and the cutter shaft of the cutter have a problem of inconsistency, so vibration and noise will be generated when the product is used. The stator assembly and the rotor assembly are arranged separately. The rotor assembly is a sub-component of the cup body assembly, so it is directly connected to the cutter assembly located in the cup body assembly through the rotary shaft of the rotor assembly. Furthermore, the rotor assembly is used to directly drive the cutter assembly to rotate (of course, the direct connection solution between the cutter assembly and the rotary shaft is more effective, but it does not rule out that the cutter assembly is connected to the rotary shaft through other devices). Compared with the assembly structure in the related technology, the rotor assembly directly drives the cutter assembly to rotate, eliminating the two disks or coupling, so the height of the whole machine can be reduced, and it also overcomes the poor experience in the related technology that is not easy to take out between the base assembly and the cup body assembly caused by the magnetic attraction between the two disks.

In any one of the above-mentioned technical solutions, optionally, the base assembly comprises: a cup placement area, being configured to be suitable for the cup body assembly to be detachably placed on the base assembly, and the stator assembly being located on one side of the cup placement area.

In the technical solution, by setting the cup placement area on the base assembly, the stator assembly is located on one side of the cup placement area, which defines the setting position of the stator assembly relative to the cup body assembly after the base assembly and the cup body assembly are assembled, and then provides effective structural support for the stator assembly to drive the rotor assembly to rotate in the subsequent.

In any one of the above-mentioned technical solutions, optionally, the number of the stator assembly is at least one.

In the technical solution, the number of the stator assembly is at least one, and the number of the stator assembly can be set according to the actual situation. For example, the number of the stator assembly can be one, two, three, etc. When the stator assembly is one, under the condition of ensuring the using function of the product, reduce the input of materials and reduce the production cost. When there are multiple stator assemblies, the area of the stator assemblies surrounding the rotor assembly can be increased, thereby increasing the number of the stator teeth driving the rotor assembly and increasing the operating stability of the rotor assembly. In addition, according to different load conditions, the number of work of the stator assembly can be controlled to optimize the torque output and power consumption of the motor. In addition, according to different load conditions, the number of work performed by the stator assembly can be controlled, to optimize the torque output and power consumption of the motor.

In any one of the above-mentioned technical solutions, optionally, the cup body assembly comprises: a cup body bottom shell; and a rotor installing area, being located on the cup body bottom shell, and the rotor assembly being rotatably disposed on the rotor installing area, and the projection of the rotor assembly on the cup body bottom shell constructs the rotor installing area.

In the technical solution, the projection of the rotor assembly on the cup body bottom shell constructs the rotor installing area, and the rotor installing area is located on the cup body bottom shell. That is, the rotation area of the rotor assembly is indirectly limited, and a reliable and sufficient rotation space is provided for the rotation of the rotor assembly, thus ensuring the operating stability, safety and reliability of the rotor assembly.

In any one of the above-mentioned technical solutions, optionally, the cup body assembly further comprises: an avoidance gap, disposed on the cup body bottom shell, when the cup body assembly is placed on the base assembly, the stator assembly passes through the avoidance gap and extends into the cup body assembly.

In the technical solution, by setting an avoidance gap on the cup body bottom shell, when the cup body assembly is placed on the base assembly, the stator assembly passes through the avoidance gap and extends into the cup body assembly. Thereby the stator assembly reaches the matching area with the rotor assembly, and the setting of the avoidance gap provides effective structural support for the cooperation between the stator assembly and the rotor assembly.

In any one of the above-mentioned technical solutions, optionally, the avoidance gap is located on outside of the rotor installing area, and when the cup body assembly is placed on the base assembly, the stator assembly passes through the avoidance gap and is located on outside of the rotor assembly.

In the technical solution, by setting the position of the avoidance gap reasonably, the avoidance gap is located on the outside of the rotor installing area. In this way, when the cup body assembly and the base assembly are assembled, the stator assembly passes through the avoidance gap and is located on the outside of the rotor assembly. That is, the setting of the avoidance gap limits the assembly position of the stator assembly relative to the rotor assembly. That is, the avoidance gap limits the movement path of the stator assembly in the cup body assembly, and provides a reliable and safe structural guarantee for the stator assembly to drive the rotor assembly to rotate.

In any one of the above-mentioned technical solutions, optionally, based on the situation that the number of the stator assemblies is multiple, the number of the avoidance gaps is the same as the number of the stator assemblies, and the multiple stator assemblies pass through the multiple avoidance gaps and are disposed on outside of the rotor assembly.

In the technical solution, the number of the stator assemblies is multiple, and the number of the avoidance gaps is the same as the number of the stator assemblies, and multiple stator assemblies pass through multiple avoidance gaps and are arranged around the outside of the rotor assembly. The area of the stator assemblies surrounding the rotor assembly is increased, thereby increasing the number of the stator teeth that drive the rotor assembly, and increasing the operating stability of the rotor assembly. In addition, according to different load conditions, the number of work performed by the stator assembly can be controlled, to optimize the torque output and power consumption of the motor.

In any one of the above-mentioned technical solutions, optionally, the avoidance gap is located inside the rotor installing area, and when the cup body assembly is placed on the base assembly, the stator assembly passes through the avoidance gap and is located inside the rotor assembly.

In the technical solution, by reasonably setting the position of the avoidance gap, the avoidance gap is located inside the rotor installing area. In this way, when the cup body assembly and the base assembly are assembled, the stator assembly passes through the avoidance gap and is located inside the rotor assembly. That is, the setting of the avoidance gap limits the assembly position of the stator assembly relative to the rotor assembly. That is, the avoidance gap limits the movement path of the stator assembly in the cup body assembly, and provides a reliable and safe structural guarantee for the stator assembly to drive the rotor assembly to rotate.

In any one of the above-mentioned technical solutions, optionally, the rotor assembly further comprises: a stator installation groove, disposed on one side of the rotor assembly facing the cup body bottom shell, the stator installation groove is ring-shaped, a center of which coincides with a rotation center of the rotor assembly, and the avoidance gap and the stator installation groove are aligned, so that the stator assembly is placed in the stator installation groove after passing through the avoidance gap.

In the technical solution, the rotor assembly further comprises a stator installation groove, by reasonably setting the rotation center of the stator installation groove and the rotor assembly and the assembly position of the avoidance gap, the stator installation groove is ring-shaped, and its center coincides with the rotation center of the rotor assembly and set the avoidance gap and the stator installation groove in alignment. In this way, the stator assembly passes through the avoidance gap and then is placed in the stator installation groove. That is, the structural arrangement of the stator installation groove can play a role of accommodating the stator assembly, and the stator installation groove defines the assembly position of the stator assembly relative to the rotor assembly, thereby it provides reliable and effective structural support for the stator assembly to drive the rotor assembly to rotate.

In the technical solution, the number of the stator assemblies can be multiple, all of which are placed in the stator installation groove.

In any one of the above-mentioned technical solutions, optionally, the stator assembly is one, and comprises: a stator core, having stator teeth thereon; and at least two stator windings, disposed on the stator teeth, respectively.

In the above-mentioned technical solution, optionally, the stator assembly is one, and comprises: a stator core, having stator teeth thereon; and at least two stator windings, disposed on the stator teeth, respectively.

In the technical solution, based on the situation that the number of the stator assembly is one, the stator assembly comprises a stator core and at least two stator windings. The stator core has stator teeth, at least two stator windings are set on the stator teeth, respectively. At least two stator windings can generate a magnetic field when energized, so that the rotor assembly rotates under the action of the magnetic field.

In any one of the above-mentioned technical solutions, the number of the stator assembly is multiple, and the multiple stator assemblies are disposed in combination or scattered on outside of the rotor assembly.

In the technical solution, according to the actual situation and usage requirements, multiple stator assemblies can be set on the outside of the rotor assembly in the motor. Multiple stator assemblies can be arranged together or scattered around the rotor assembly, which improves the setting flexibility of the stator assembly of the motor, thereby improving the applicability of the motor. It can be understood that when the number of the stator assemblies is multiple, there is at least one opening between the multiple stator assemblies for separating the rotor assembly from the stator assembly in the radial direction.

In any one of the above-mentioned technical solutions, optionally, the stator assembly comprises: a stator core, having stator teeth thereon; at least one stator winding, disposed on the stator teeth.

In the technical solution, based on the situation that there are multiple stator assemblies, each stator assembly comprises a stator core and at least one stator winding, and the stator core has stator teeth. At least one stator winding is set on the stator teeth, and the stator windings of multiple stator assemblies can jointly generate a magnetic field when energized, so that the rotor assembly rotates under the action of the magnetic field.

It is understandable that when the number of stator assemblies is multiple, each stator assembly can comprise one stator winding, and multiple stator assemblies have multiple stator windings after being combined, and multiple stator windings are energized together to generate a magnetic field, so that the rotor assembly rotates under the action of the magnetic field.

Optionally, in the situation of multiple stator teeth on each stator core, multiple stator teeth are distributed on the stator core at intervals, so that there is a distance between two adjacent stator teeth, thereby forming an accommodating space for the stator windings, avoiding the stator windings on the two adjacent stator teeth from contacting each other.

In any one of the above-mentioned technical solutions, optionally, ends of the stator teeth close to the rotor assembly are at the same distance from the rotation center of the rotor assembly.

In the technical solution, the distance between each stator teeth and the rotation center of the rotor assembly is equal. Since the stator winding is set on the stator teeth, thereby the magnetic field generated by multiple stator windings balances the magnetic force generated by the rotor assembly, which improves the stability of the rotor assembly during the rotation.

In any one of the above-mentioned technical solutions, optionally, the number of the stator teeth is two, and the stator windings on the two stator teeth are sequentially energized and have same polarities; or the number of the stator teeth is two, the stator windings on the two stator teeth are energized at the same time with different polarities, and magnetic poles of the stator windings on the two stator teeth are alternated.

In the technical solution, when setting two stator teeth in the stator assembly, there are two solutions for driving the rotor assembly, one of which is that the stator windings on the two stator teeth are energized sequentially, and the two stator windings generate the same polarity when they are energized. According to the principle of magnetic attraction, the magnetic force generated by the stator winding acts on the rotor assembly to make it rotate, and the two stator windings are energized sequentially, so that the two stator windings sequentially generate a force on the rotor assembly, thereby driving the rotor assembly to continuously rotate. The other one is that the stator windings on the two stator teeth are energized at the same time, and the two stator windings generate different polarities when they are energized. The magnetic force generated by the stator winding acts on the rotor assembly to make it rotate. In addition, during the process of energizing and controlling the rotation of the rotor assembly, the polarities of the two stator windings alternately change, so that the two stator windings sequentially generate magnetic forces of different polarities. That is, the two stator windings sequentially exert forces on different magnetic poles on the rotor assembly, thereby driving the rotor assembly to continuously rotate. It is understandable that when setting the stator assembly, the setting solutions of two stator windings can be selected according to the actual situation and work requirements, which further strengthens the setting flexibility of the stator assembly of the motor and improves the applicability of the motor.

In any one of the above-mentioned technical solutions, optionally, the number of the stator teeth is greater than or equal to 3, and polarities of the stator windings on any two adjacent stator teeth are different.

In the technical solution, when the number of the stator teeth is greater than or equal to 3, optionally, the two adjacent stator windings are energized together, and the polarities of the two windings are reversed, so that the rotor assembly is subjected to a force in a tangential direction, to realize to provide power to the rotation of the rotor assembly.

In any one of the above-mentioned technical solutions, optionally, the stator assembly further comprises: an insulator piece, disposed on the stator core, and used to isolate the stator core and the at least two stator windings.

In the technical solution, by setting the insulator piece on the stator core, the insulator piece has the function of insulation, the insulator piece can isolate the stator core and at least two stator windings, and the insulator piece can avoid the electrical connection between at least two stator windings and the stator core, improving the stability of the stator winding during operation.

In any one of the above-mentioned technical solutions, optionally, the insulator piece comprises: a first insulating part, attached to a surface of the stator core; a second insulating part, connected to the first insulating part, and sleeved on a side wall of the stator teeth; and a third insulating part, connected to the first insulating part, and extending from a surface of the first insulating part towards a direction away from the stator core, to isolate the stator core and the stator winding.

In the technical solution, the insulator piece comprises a first insulating part, a second insulating part and a third insulating part. The first insulating part, the second insulating part and the third insulating part cooperate to realize the isolation of the stator winding and the stator core in multiple directions, multiple angles and multiple dimensions; thereby the using safety and stability of the stator assembly can be improved.

In any one of the above-mentioned technical solutions, optionally, the rotor assembly comprises: a rotary table, being disc-shaped, and being provided with an accommodating space; a rotary shaft, inserted in a center of the rotary table; and a magnetic piece, disposed in the accommodating space, and the magnetic piece is distributed along the circular direction of the rotary table.

In the technical solution, the rotor assembly comprising: a rotary table, a rotary shaft and multiple magnetic pieces. Wherein, the rotary table replaces the rotor core constructed by axially laminated multilayer silicon steel sheets in the related technology, and replaces the core structure. This is beneficial to reduce the weight of the rotor, thereby making the weight of the motor with the rotor lighter, realizing the light weight of the motor. Moreover, in the situation that the rotary table is a non-magnetically conductive rotary table, the rotary table does not shield the magnetic piece set on it, which helps to ensure that the magnetic piece and the stator windings cooperate to realize the rotation of the rotary table.

In any one of the above-mentioned technical solutions, optionally, the number of the magnetic piece is one, and the magnetic piece is ring-shaped; or the number of the magnetic pieces is multiple, and the multiple magnetic pieces are distributed around a rotation center line of the rotary table in the circular direction.

In the technical solution, the number of the magnetic pieces can be set to one, and the whole is ring-shaped, so that by magnetizing in its circular direction, multiple pairs of magnetic poles are formed. By distributing each pair of magnetic poles in the circular direction, it is beneficial for the magnetic piece to drive the rotary table to rotate smoothly under the action of the magnetic field generated by the stator winding. Of course, the number of the magnetic pieces can also be multiple. At this time, it is preferable that each magnetic piece has a pair of magnetic poles. By distributing multiple magnetic pieces around the rotation center line of the rotary table in the circular direction, the rotary table can rotate smoothly.

Furthermore, the magnetic piece is arranged in the accommodating space of the rotary table, which can reduce the space occupancy rate and improve the installation firmness of multiple magnetic pieces.

In any one of the above-mentioned technical solutions, optionally, the number of at least two stator windings of the stator assembly is 3N, and magnetic poles of the multiple magnetic pieces is 4M, wherein N is a positive integer and M is a positive integer.

In the technical solution, the number of the stator windings is limited, that is, the number of the stator windings is an integer multiple of 3, and the magnetic poles of the magnetic pieces in the rotor assembly is an integer multiple of 4. This arrangement makes the generated magnetic field more stable, so that the stator assembly can better cooperate with the rotor assembly, thereby the output efficiency of the motor is higher.

In any one of the above-mentioned technical solutions, optionally, the magnetic piece is a magnet.

In the technical solution, the magnetic piece in the rotor assembly is a magnet. The magnet has the advantages of easy material availability and low production cost, and it ensures that the rotor assembly can continue to rotate under the influence of the magnetic force in the magnetic field generated by the stator assembly.

In any one of the above-mentioned technical solutions, optionally, the magnetic piece is set inside the non-magnetically conductive rotary table; or multiple magnetic pieces are exposed on the non-magnetically conductive rotary table.

In the technical solution, the assembly structure of the magnetic piece and the non-magnetically conductive rotary table can be set according to the actual situation, so that the magnetic piece is set inside the non-magnetically conductive rotary table, or the magnetic piece is exposed on the non-magnetically conductive rotary table, so that the occupancy rate of the internal space of the food processing device by the rotor assembly can be adjusted in a targeted manner.

In any one of the above-mentioned technical solutions, optionally, the distance between the magnetic piece and the outer edge of the rotary table is not more than 4mm.

In the technical solution, by limiting the assembly structure of the magnetic piece and the rotary table, the distance between the magnetic piece and the outer edge of the rotary table is not more than 4mm, which in turn defines the assembly structure of the magnetic piece relative to the stator assembly, therefore, effective and feasible structural support is provided for the stator assembly to drive the rotor assembly to rotate in the subsequent. If the distance between the magnetic piece and the outer edge of the rotary table is greater than 4mm, the magnetic piece is farther away from the stator assembly, which will reduce the drive effect of the stator assembly on the rotor assembly.

In the technical solution, in the situation that the number of the magnetic piece is one, by making the magnetic piece have multiple pairs of magnetic poles, and each pair of magnetic poles are distributed along the axial direction of the rotary table, so that the rotor can cooperate with the stator located on one side of the axial direction. In the situation that each pair of magnetic poles is distributed along the radial direction of the rotary table, the rotor can be matched with the stator located on one side of its circular direction. A variety of distribution methods of the rotor and the stator can be realized, thereby increasing the diversity of products.

In addition, in the situation that there are multiple magnetic pieces, each magnetic piece can be set to have a pair of magnetic poles. Of course, each magnetic piece can also be set to have multiple pairs of magnetic poles. In the situation that each magnetic piece has a pair of magnetic poles, by distributing a pair of magnetic poles of each magnetic piece along the axial direction of the rotary table, it can be matched with the stator located on one side of its axial direction. In the situation that a pair of magnetic poles of each magnetic piece is distributed along the radial direction of the rotary table, the rotor can be matched with the stator located on one side of its circular direction. Thereby multiple distribution methods of the rotor and the stator are realized, thus increasing the diversity of products.

Of course, each pair of magnetic poles existing in pairs on the magnetic piece may not be distributed along the axial or radial direction of the rotary table, but distributed in other directions, such as one of each pair of magnetic poles facing the edge of the rotary table. It can be determined according to the specific position of the stator winding matched with the rotor.

In any one of the above-mentioned technical solutions, optionally, the rotary table is a plastic rotary table or a non-magnetically conductive light metal rotary table.

In the technical solution, the rotary table is a plastic rotary table or a non-magnetically conductive light metal rotary table, so the rotary table has a lighter weight, which in turn makes the weight of the motor lighter, which facilitates the transportation and movement of the motor, and improves the convenience of the motor installation process.

In any one of the above-mentioned technical solutions, optionally, the rotor assembly further comprises: a bearing, sleeved on a first end of the rotary shaft, and fixedly disposed in the rotor installing area of the cup body assembly on the cup body bottom shell of the cup body assembly.

In the technical solution, the rotor assembly also comprises a bearing; the bearing can play a role in limiting the assembly size of the rotary shaft relative to the cup body bottom shell. That is, the structural arrangement limits the positional relationship of the rotary shaft with respect to the cup body bottom shell, thereby providing stable structural support for the safety and reliability of the rotation of the rotor assembly.

In any one of the above-mentioned technical solutions, optionally, the cup body assembly further comprises: a cup body, both ends of the cup body being provided with a cup body opening, respectively; a connecting shell, one end of the connecting shell fixedly connected to the cup body, and another one end of the connecting shell connected to the cup body bottom shell of the cup body assembly; and a cutter head assembly, disposed in the connecting shell and located at the connecting shell opening of the connecting shell, and can cover the connecting shell opening, and the cutter head assembly being provided with a through hole, a second end of the rotary shaft passes through the through hole, and the cutter assembly is disposed on the second end of the rotary shaft and is located above the cutter head assembly.

In the technical solution, the cup body assembly further comprising: a cup body, a connecting shell and a cutter head assembly. By limiting the setting position of the cutter head assembly relative to the connecting shell, the cutter head assembly is located at the bottom of the connecting shell, and the cutter head assembly is located at the connecting shell opening of the connecting shell, and the connecting shell opening can be covered, thereby ensuring the tightness of the space containing the ingredients. In addition, making the second end of the rotary shaft pass through the through hole, and then connect with the cutter assembly, so that the cutter assembly is located above the cutter head assembly. That is, the relative position of the cutter head assembly and the cutter assembly is limited, the contact position of the food material and the cutter assembly is ensured, and an effective space guarantee is provided for the crushing effect of the food material.

In any one of the above-mentioned technical solutions, optionally, the cutter assembly comprises: at least one blade, being directly or indirectly disposed on the rotary shaft.

In the technical solution, the cutter assembly comprises: at least one blade, being directly or indirectly disposed on the rotary shaft. When the cutter assembly rotates, at least one blade cooperates with each other to achieve the purpose of cutting food materials in multiple directions and multiple angles at the same time.

In addition, when at least one blade is directly arranged on the rotary shaft, it is beneficial to reduce the height of the whole machine, and the structural arrangement has the advantage of low operating noise. When at least one blade is indirectly arranged on the rotary shaft, in this way, when replacing the blade, only the blade is removed from the device connected to the rotary shaft and the blade, which can reduce the amount of wear on the connection between the rotary shaft and the device, which is beneficial to prolong the service life of the rotary shaft.

In any one of the above-mentioned technical solutions, optionally, the cutter assembly further comprises: a cutter shaft, the at least one blade being disposed on the cutter shaft, the cutter shaft being connected to the rotary shaft, or the cutter shaft and the rotary shaft are an integrated structure.

In the technical solution, by setting the cutter shaft, at least one blade is set on the cutter shaft, the cutter shaft is connected with the rotary shaft, that is, the indirect connection between the rotary shaft and the blade is realized; the cutter shaft and the rotary shaft are an integrated structure, that is, the direct connection between the rotary shaft and the blade is realized.

In any one of the above-mentioned technical solutions, optionally, the cup body comprises a connecting part, the outer side wall of the connecting part is gradually inclined from the top end of the connecting part to the bottom end of the connecting part toward the center line of the cup body, and an external thread is provided on an outer side wall of the connecting part, the connecting shell is provided with an installing part adapted to the connecting part, an inner side wall of the installing part is provided with an inner thread matching with the external thread, and the connecting part is screwed on the installing part.

In the technical solution, by setting the connecting part on the cup body, and the installing part that is adapted to the connecting part on the connecting shell, and the external thread is set on the outer wall of the connecting part, and the inner wall of the installing part is provided with the inner thread cooperating with the external thread. In this way, the cup body and the connecting shell are assembled together through the cooperation of the connecting part and the installing part.

Further, the outer side wall of the connecting part is gradually inclined from the top of the connecting part to the bottom of the connecting part toward the center line of the cup body. This structural arrangement makes the outer wall of the connecting part have a guiding effect with respect to the installing part, which simplifies the difficulty of assembling the connecting part and the installing part, and helps to improve the assembly efficiency.

In any one of the above-mentioned technical solutions, optionally, the cup body assembly further comprises: a positioning column, extending along a positioning hole on the cup body assembly in a direction away from the base assembly, the positioning column being configured as a hollow structure with one end open, and a top of the positioning column being provided with a through hole; a connector piece being provided on another one end of the connecting shell, and the connector piece passing through an inside of the through hole and extending into the positioning column; and a decorating shell, one end of the decorating shell snapped to the connecting shell, and another end of the decorating shell snapped to the cup body bottom shell, so that the connecting shell and the cup body bottom shell being fixedly connected.

In the technical solution, by setting the positioning column and the decorating shell, the connector piece passes through an inside of the through hole and extends into the positioning column, and one end of the decorating shell is snapped to the connecting shell, and the other end of the decorating shell is snapped to the cup body bottom shell. That is, the positioning column, the connector piece, the cup body bottom shell, the connecting shell, the cup body and the decorating shell cooperate to make the connecting shell and the cup body bottom shell fixedly connect.

In any one of the above-mentioned technical solutions, optionally, the positioning column is disposed in a way to avoid the avoidance gap, the base assembly is further provided with a positioning protrusion, the positioning protrusion is aligned with the positioning column, and when the cup body assembly is placed on the base assembly, the positioning protrusion is inserted into the positioning column.

In the technical solution, by setting the positioning protrusion on the base assembly, when the cup body assembly is placed on the base assembly, the positioning protrusion is inserted into the positioning column, and the positioning protrusion is matched with the positioning column, thereby limiting the stability and reliability of the cup body assembly and the base assembly. The positioning protrusion is inserted into the positioning column, and the positioning column wraps the positioning protrusion to increase the contact area, contact angle and contact dimension between the positioning protrusion and the positioning column, thereby enhancing the firmness of the assembly of the two. In this way, even if the vibration generated by the food processing device during work is large, it will not separate the cup body assembly from the base assembly.

In any one of the above-mentioned technical solutions, optionally, the food processing device is at least one of the blender, wall breaker, soymilk machine, cooking machine, chef machine and cookers.

The fourth aspect provides a food processing device, comprising: a cup body assembly, being provided with an assembly port; a rotor assembly, disposed in the cup body assembly; and a stator assembly, being configured to be suitable for inserting into the assembly port, to drive the rotor assembly to rotate.

A food processing device provided by the present invention comprises a cup body assembly, a rotor assembly and a stator assembly. Wherein, a rotor assembly is provided in the cup body assembly, and the stator assembly is configured to be suitable for being inserted into the assembly port to drive the rotor assembly to rotate. That is, the assembly structure of the stator and the rotor in the related technology is changed, so that the stator assembly and the rotor assembly are arranged separately, the stator assembly is used as a separate sub-module, and the rotor assembly is used as a sub-component of the cup body assembly. That is, the component parts of the motor in the related art are disassembled, so the cooperation of the stator assembly and the rotor assembly has the advantages of simple structure and low production cost. Specifically, the stator assembly can be fixedly installed in the assembly port, but in order to facilitate the separate installation of the stator assembly and the rotor assembly, preferably, the stator assembly is detachably installed in the cup body assembly.

In addition, since the stator assembly and the rotor assembly are arranged separately, the assembly structure of the stator assembly and the rotor assembly simplifies the follow-up repair and maintenance of the stator assembly and the disassembly process of the rotor assembly.

Wherein, the rotor assembly can be separated from the stator assembly, that is, there is no need to install the overall motor in the base assembly, and only the stator assembly of the motor is set in the base assembly, so that the height of the base assembly is reduced, and the height of the food processing device is reduced. In addition, compared to the stator assembly in the related technology, the stator assembly is set to an unclosed structure, which makes the weight of the stator assembly lighter, thereby achieving a lighter weight of the overall product, which is convenient for users to extract and use, and takes up less space. It is also convenient for storage of the food processing device.

In the above-mentioned technical solution, optionally, the stator assembly is inserted into the cup body assembly, and the stator assembly is located on one side of the rotor assembly; the assembly port is located on a bottom wall and/or a side wall of the cup body assembly.

In the technical solution, the stator assembly is inserted into the cup body assembly, and the stator assembly is located on one side of the rotor assembly. That is, the assembly position of the stator assembly relative to the rotor assembly when the stator assembly is inserted into the cup body assembly is limited, thereby providing reliable structural support for the stator assembly to drive the rotor assembly to rotate in the subsequent.

In addition, the assembly port is located on the bottom wall of the cup body assembly, and the position setting of the assembly port realizes the use of the structure of the cup body assembly to shield the assembly port, avoiding the exposure of the assembly port. In this way, the aesthetics and smoothness of the product appearance can be ensured; the assembly port is located on the side wall of the cup body assembly in circular direction. This structure is arranged to facilitate the insertion of the stator assembly and the cup body assembly, which reduces the difficulty of assembly and disassembly of the two and it is very convenient for users to operate. A part of the assembly port is formed on the bottom wall of the cup body assembly, and the other part is formed on the side wall of the cup body assembly in circular direction. The matching area of the stator assembly and the rotor assembly can be limited to the bottom of the cup body assembly. In this way, on the basis of ensuring the space for the food processing device to contain the ingredients, it is beneficial to reduce the whole height of the food processing device.

In any one of the above-mentioned technical solutions, optionally, the stator assembly has a mating surface matched with the rotor assembly, and the mating surface is disposed opposite to a part of an outer peripheral surface of the rotor assembly, so that the stator assembly is suitable for being detachably inserted into the assembly port.

In the technical solution, by reasonably setting the structure of the stator assembly, the stator assembly has a mating surface matched with the rotor assembly, and the mating surface can be arranged opposite to a part of the outer peripheral surface of the rotor assembly. That is, the stator assembly is an unclosed structure, which is convenient for the assembly and separation of the rotor assembly and the stator assembly, realizes the radial separation of the stator assembly and the rotor assembly, and has high disassembly and assembly efficiency; at the same time, it provides reliable rotation space for the rotor assembly. Specifically, the surface of the stator assembly corresponding to the end surface of the stator teeth constitutes the mating surface of the stator assembly.

In any one of the above-mentioned technical solutions, optionally, the stator assembly comprises: a stator winding; a control device, connected to the stator winding, and used to control on-off of current of the stator winding; and a power supply device, connected to the stator winding, used to connect an external power source and provide electrical energy for the stator winding.

In the technical solution, the stator assembly comprises a stator winding, a power supply device and a control device. The control device is connected to the stator winding and used to control the power supply device to supply power to the stator winding. This structural arrangement provides a reliable energy supply for the stator assembly to drive the rotor assembly to rotate, and provides structural support for the independent arrangement of the stator assembly.

Specifically, the number of the power supply devices can be selected according to user needs. When a large number of hard food materials need to be processed, multiple stator assemblies can be inserted to make the rotor assembly have greater driving torque. If you need to process less or easy to process ingredients, you can reduce the number of stator assemblies to be inserted to save energy. At least one stator assembly needs to be inserted.

In any one of the above-mentioned technical solutions, optionally, the food processing device further comprising: a cutter assembly, arranged in the cup body assembly, and connected to a rotary shaft of the rotor assembly, and the rotor assembly being capable of driving the cutter assembly to rotate.

In the related art, the motor is set on the base as a whole, and the motor drives the active disk on the base to rotate and then drives the driven disk in the cup body to rotate, so as to finally realize the purpose of using the driven disk to drive the cutter to rotate; or the motor is connected to the cutter in the cup body through a coupling, which drives the cutter to rotate. That is, the motor is indirectly connected to the cutter through a coupling or two disks. This structural arrangement makes the rotary shaft of the motor and the cutter shaft of the cutter have a problem of inconsistency, so vibration and noise will be generated when the product is used. The stator assembly and the rotor assembly are arranged separately. The rotor assembly is a sub-component of the cup body assembly, so it is directly connected to the cutter assembly located in the cup body assembly through the rotary shaft of the rotor assembly. Furthermore, the rotor assembly is used to directly drive the cutter assembly to rotate (of course, the direct connection solution between the cutter assembly and the rotary shaft is more effective, but it does not rule out that the cutter assembly is connected to the rotary shaft through other devices). Compared with the assembly structure in the related technology, the rotor assembly directly drives the cutter assembly to rotate, eliminating the two disks or coupling, so the height of the whole machine can be reduced, and it also overcomes the poor experience in the related technology that is not easy to take out between the base and the cup body assembly caused by the magnetic attraction between the two disks.

In any one of the above-mentioned technical solutions, optionally, the number of the stator assembly is one, and further comprises: a stator core, having stator teeth thereon; and at least two stator windings, disposed on the stator teeth, respectively.

In the technical solution, the number of the stator assembly is one, and the stator assembly comprises a stator core and at least two stator windings. The stator core has stator teeth, and at least two stator windings are respectively set on the stator teeth. At least two stator windings can generate a magnetic field when energized, so that the rotor assembly rotates under the action of the magnetic field. Specifically, the stator core is an unclosed structure, and an opening is provided in the radial direction of the stator core, and the opening is connected to the installation space, so that the stator assembly can be inserted on the outside of the rotor assembly, to drive the rotor assembly to rotate. Optionally, the stator assembly can also be inserted inside the rotor assembly.

Specifically, when the number of the stator assemblies is multiple, one or more rotor assemblies can be connected according to different power requirements and the amount of processed food materials.

In any one of the above-mentioned technical solutions, optionally, the number of the stator assembly is at least two, and each of the stator assemblies further comprises: a stator core, having stator teeth thereon; and at least one stator winding, disposed on the stator teeth.

In the technical solution, the number of stator assemblies is at least two, and the stator core of each stator assembly and at least one stator winding, the stator core has stator teeth, at least two stator windings are set on the stator teeth, respectively, at least two stator windings can generate a magnetic field when energized, so that the rotor assembly rotates under the action of the magnetic field. Specifically, the stator core is an unclosed structure, and an opening is provided in the radial direction of the stator core, and the opening is connected to the installation space, so that the rotor assembly can be separated from the stator assembly in the radial direction of the stator assembly.

In any one of the above-mentioned technical solutions, optionally, ends of the stator teeth close to the rotor assembly are at the same distance from a rotation center of the rotor assembly.

In the technical solution, the distance between each stator teeth and the axis of the rotor assembly is equal, which further ensures that the magnetic field generated by each stator winding has the same magnetic force on the rotor assembly.

In any one of the above-mentioned technical solutions, optionally, the number of the stator teeth is two, and stator windings on the two stator teeth are sequentially energized and have same polarities; or the number of the stator teeth is two, stator windings on the two stator teeth are energized at the same time with different polarities, and magnetic poles of the stator windings on the two stator teeth are alternated.

In the technical solution, when setting two stator teeth in the stator assembly, there are two solutions for driving the rotor assembly, one of which is that the stator windings on the two stator teeth are energized sequentially, and the two stator windings generate the same polarity when they are energized. According to the principle of magnetic attraction, the magnetic force generated by the stator winding acts on the rotor assembly to make it rotate, and the two stator windings are energized sequentially, so that the two stator windings sequentially generate a force on the rotor assembly, thereby driving the rotor assembly to continuously rotate. The other one is that the stator windings on the two stator teeth are energized at the same time, and the two stator windings generate different polarities when they are energized. The magnetic force generated by the stator winding acts on the rotor assembly to make it rotate. In addition, during the process of energizing and controlling the rotation of the rotor assembly, the polarities of the two stator windings alternately change, so that the two stator windings sequentially generate magnetic forces of different polarities. That is, the two stator windings sequentially exert forces on different magnetic poles on the rotor assembly, thereby driving the rotor assembly to continuously rotate. It is understandable that when setting the stator assembly, the setting solutions of two stator windings can be selected according to the actual situation and work requirements, which further strengthens the setting flexibility of the stator assembly of the motor and improves the applicability of the motor.

In any one of the above-mentioned technical solutions, optionally, the number of the stator teeth is greater than or equal to 3, and polarities of the stator windings on any two adjacent stator teeth are different.

In the technical solution, when the number of stator teeth is greater than or equal to 3, optionally, the two adjacent stator windings are energized together, and the polarities of the two windings are reversed, so that the rotor assembly is subjected to a force in a tangential direction, and realizing to provide power to the rotation of the rotor assembly.

In any one of the above-mentioned technical solutions, optionally, the stator assembly further comprises: an insulator piece, disposed on the stator core, and used to isolate the stator core and the stator winding.

In the technical solution, by setting an insulator piece on the stator core, the insulator piece has insulation function. The insulator piece can isolate the stator core and the stator winding, to avoid the electrical connection between the stator winding and the stator core, and improve the stability of the stator winding during operation.

In any one of the above-mentioned technical solutions, optionally, the food processing device further comprising: a stator assembly shell, used to encapsulate the stator assembly.

In the technical solution, in order to prevent the stator assembly from being exposed to the outside, a stator assembly shell is set to encapsulate the stator assembly, to prolong the service life of the food processing device.

In any one of the above-mentioned technical solutions, optionally, the rotor assembly comprises: a rotary table, being disc-shaped, and being provided with an accommodating space; the rotary shaft, inserted into a center of the rotary table; and a magnetic piece, disposed in the accommodating space, and magnetic poles of the multiple magnetic members being distributed along a circular direction of the rotary table.

In the technical solution, the rotor assembly comprises a rotary table, a rotary shaft, and a magnetic piece, wherein the rotary table is a non-magnetically conductive rotary table by default, which eliminates the rotor core structure made of silicon steel sheets in the related technology, which not only helps reduce the weight of the motor, but also eliminates that in the related technology, the need for the magnetic field on the rotor core laminated in the axial direction, to pass through the teeth and the yoke of the stator and the rotor to form a magnetic field loop, so the closed magnetic field lines must be curved, and there will be greater leakage and loss.

Furthermore, the magnetic piece is arranged in the accommodating space of the rotary table, which can reduce the space occupancy rate and improve the installation firmness of the magnetic piece.

Specifically, the magnetic piece can be set as a ring-shaped overall structure; it can also be set as multiple separate magnetic pieces, and multiple separate magnetic pieces are enclosed to form a ring shape.

In any one of the above-mentioned technical solutions, optionally, the number of the stator windings of the stator assembly is 3N, and magnetic poles of the multiple magnetic pieces is 4M, wherein N is a positive integer and M is a positive integer.

In the technical solution, the number of the stator windings is limited, that is, the number of the stator windings is an integer multiple of 3, and the magnetic poles of the magnetic pieces in the rotor assembly is an integer multiple of 4. This arrangement makes the generated magnetic field more stable, so that the stator assembly can better cooperate with the rotor assembly, thereby the output efficiency of the motor is higher.

In any one of the above-mentioned technical solutions, optionally, the magnetic piece is a magnet.

In the technical solution, the magnetic piece in the rotor assembly is a magnet. The magnet has the advantages of easy material availability and low production cost, and it ensures that the rotor assembly can continue to rotate under the influence of the magnetic force in the magnetic field generated by the stator assembly.

In any one of the above-mentioned technical solutions, optionally, the food processing device further comprises a power supply device, connected to at least two windings, used for an external power source and providing electrical energy for the windings.

In the technical solution, the power supply device is connected to the winding. Since the power supply device is used for an external power source and provides electrical energy for the winding, it provides a reliable energy supply for the stator assembly to drive the rotor assembly to rotate, and provides structural support for the independent setting of the stator assembly.

In any one of the above-mentioned technical solutions, optionally, the stator assembly is inserted into the cup body assembly until the stator assembly moves to the assembly position, and the stator assembly can cover the assembly port when in the assembly position.

In the technical solution, the stator assembly is inserted into the cup body assembly until the stator assembly and moves to the assembly position, so that the stator assembly can cover the assembly port when in the assembly position, which prevents the assembly port from being exposed, and improves the smoothness and aesthetics of the appearance of the whole machine. At the same time, the setting of the assembly position limits the depth at which the stator assembly is inserted into the cup body assembly, that is, it limits the assembly positions of the stator assembly and the cup body assembly.

In any one of the above-mentioned technical solutions, optionally, the stator assembly further comprises: a first clamping part, disposed on the shell of the stator assembly; and a second clamping part adapted to the first clamping part is formed in the cup body assembly, wherein the first clamping part is engaged with the second clamping part, to fix the stator assembly at the assembly position.

In the technical solution, by setting the first clamping part and the second clamping part in the stator assembly and the cup body assembly, respectively. In this way, when the stator assembly is inserted into the cup body assembly to the preset depth, the first clamping part and the second clamping part are engaged to fix the stator assembly in the assembly position. This structural arrangement limits the depth of insertion of the stator assembly into the cup body assembly, which can ensure that the stator assembly moves to the assembly position accurately, thereby achieving the purpose of covering the assembly port with the stator assembly at the assembly position. This structural arrangement ensures the assembly size of the stator assembly relative to the cup body assembly, effectively ensuring the accuracy of product assembly.

In any one of the above-mentioned technical solutions, optionally, the food processing device comprises but not limited to the following electrical appliances: blender, wall breaker, soymilk machine, cooking machine, chef machine and cookers.

### BRIEF DESCRIPTION OF THE DRAWINGS

The above and/or additional aspects and advantages will become apparent and readily understood from the description of embodiments in conjunction with the following drawings:
Fig. 1 shows a structural schematic diagram from a first perspective of a base assembly of a first embodiment, not being part of the claimed invention but present for illustration purposes only;
Fig. 2 shows a structural schematic diagram from a second perspective of a base assembly of a first embodiment;
Fig. 3 is a cross-sectional view taken along A-A of a base assembly of an embodiment shown in Fig. 2;
Fig. 4 shows a structural schematic diagram of a base assembly of a second embodiment;
Fig. 5 shows a structural schematic diagram of a stator assembly of an embodiment;
Fig. 6 shows a structural schematic diagram of a stator core of an embodiment;
Fig. 7 shows a structural schematic diagram of a first sub-insulator piece of an embodiment;
Fig. 8 shows a structural schematic diagram from a first perspective of a food processing device of a first embodiment, not being part of the claimed invention but present for illustration purposes only;
Fig. 9 shows a structural schematic diagram from a second perspective of a food processing device of a first embodiment, not being part of the claimed invention but present for illustration purposes only;
Fig. 10 shows a structural schematic diagram of a food processing device of a second embodiment;
Fig. 11 shows a structural schematic diagram of a cup body assembly of an embodiment, not being part of the claimed invention but present for illustration purposes only;
Fig. 12 is a cross-sectional view taken along B-B of a cup body assembly of an embodiment shown in Fig. 11;
Fig. 13 shows a structural schematic diagram of a cup body bottom shell of an embodiment, not being part of the claimed invention but present for illustration purposes only;
Fig. 14 shows a structural schematic diagram of a cup body of an embodiment, not being part of the claimed invention but present for illustration purposes only;
Fig. 15 shows a structural schematic diagram of a connecting shell of an embodiment, not being part of the claimed invention but present for illustration purposes only;
Fig. 16 shows a structural schematic diagram of a rotor assembly and a cutter shaft of an embodiment;
Fig. 17 is a cross-sectional view taken along C-C of a rotor assembly and a cutter shaft of an embodiment shown in Fig. 16;
Fig. 18 is a cross-sectional view taken along D-D of a rotor assembly and a cutter shaft of an embodiment shown in Fig. 16;
Fig. 19 shows a cross-sectional view of a rotor assembly of another embodiment;
Fig. 20 is a cross-sectional view taken along E-E of a rotor assembly of an embodiment shown in Fig. 19;
Fig. 21 shows a structural schematic diagram from a first perspective of a food processing device of a seventh embodiment, not being part of the claimed invention but present for illustration purposes only;
Fig. 22 shows a structural schematic diagram of a cup body bottom shell of another embodiment, not being part of the claimed invention but present for illustration purposes only;
Fig. 23 shows a structural schematic diagram of a food processing device of a sixteenth embodiment, not being part of the claimed invention but present for illustration purposes only;
Fig. 24 shows a structural schematic diagram of a cup body assembly of another embodiment, not being part of the claimed invention but present for illustration purposes only;
Fig. 25 is a cross-sectional view taken along F-F of a cup body assembly of an embodiment shown in Fig. 24;
Fig. 26 shows a structural schematic diagram of a stator assembly of another embodiment, not being part of the claimed invention but present for illustration purposes only;
Fig. 27 is a cross-sectional view taken along G-G of a stator assembly of an embodiment shown in Fig. 26;

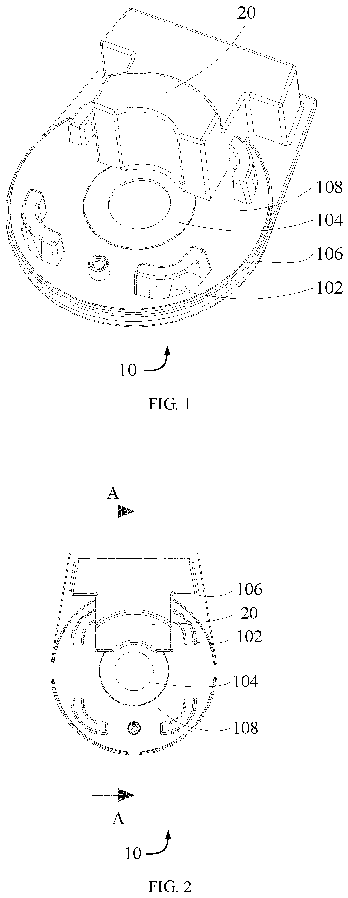

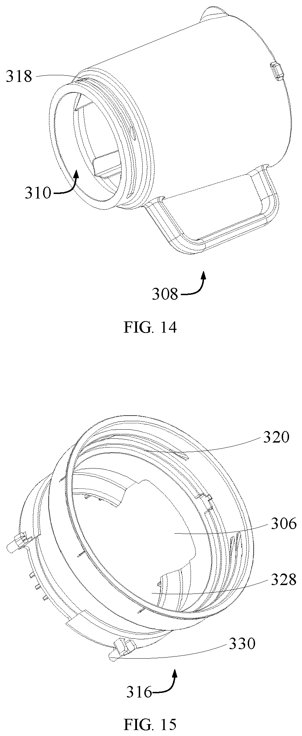

Wherein, the corresponding relationship between the reference signs and component names in Fig. 1 to Fig. 27 is as follows:
1 food processing device, 10 base assembly, 102 positioning protrusion, 104 rotor avoidance area, 106 shell, 108 cup placement area, 110 stator mating surface, 112 body, 114 cover plate, 116 assembly port, 20 stator assembly, 20a first stator assembly, 20b second stator assembly, 202 stator core, 204 stator teeth, 206 stator winding, 208 insulator piece, 210 first insulating part, 212 second insulating part, 214 third insulating part, 216 first sub-insulator piece, 218 mating surface, 220 shell, 222 main body, 224 stopper, 30 cup body assembly, 302 cup body bottom shell, 306 avoidance gap, 308 cup body, 310 cup body opening, 312 cutter head assembly, 316 connecting shell, 318 connecting part, 320 installing part, 322 positioning column, 324 through hole, 326 decorating shell, 328 connecting shell opening, 330 connector piece, 332 rotor installing area, 40 rotor assembly, 402 rotary shaft, 404 bearing, 406 rotary table, 408 magnetic piece, 410 upper plate body, 412 lower plate body, 50 cutter assembly, 502 cutter shaft.

### DETAILED DESCRIPTION OF THE INVENTION

In order that the above-mentioned objectives, features and advantages can be understood more clearly, a further detailed description will be given below in connection with the accompanying drawings and specific embodiments. It should be noted that the embodiments and the features in the embodiments can be combined with each other if there is no conflict.

In the following description, numerous specific details are set forth in order to provide a thorough understanding of the present invention.

A base assembly and a food processing device according to some embodiments are described below with reference to Fig. 1 to Fig. 27.

### Embodiment 1

As shown in Figs. 1 to 4, a base assembly 10 according to an embodiment comprises: a base body, a stator assembly 20, a control device, and a shell 106.

Wherein, the stator assembly 20 is provided on the base body, the stator assembly 20 comprises stator teeth 204, and the end surfaces of the stator teeth 204 constitute the stator mating surface 110, and the stator assembly 20 is configured as a structure with openings in the radial direction. And the opening penetrates along the axis of the stator assembly 20, the control device is connected to the stator assembly 20, and is used to control the on-off of current of the stator assembly 20, the shell 106 is used to encapsulate the stator assembly 20 and the control device, and the shell 106 is connected to the base body.

In detail, the base body is provided with a rotor avoidance area 104, the stator assembly 20 is configured as a structure with an opening in the radial direction, and the opening penetrates along the axial direction of the stator assembly 20 and is connected with the rotor avoidance area. In detail, by setting the rotor avoidance area 104 on the base body, the rotor avoidance area 104 is configured to be suitable for the rotor assembly 40 of the food processing device 1 to be detachably placed on the base body. That is, the relative positional relationship between the stator assembly 20 and the rotor assembly 40 is limited when the base assembly 10 and the rotor assembly 40 of the food processing device 1 are assembled. This avoids assembly interference between the two and provides safe and reliable structural support for the stator assembly 20 to drive the rotor assembly 40 to rotate.

In addition, the rotor assembly 40 of the food processing device 1 can be detachably placed on the base body, that is, the rotor assembly 40 and the stator assembly 20 are a separate structure. That is, the method of using the motor as a whole power part in the related art is changed, so that the stator assembly 20 and the rotor assembly 40 are arranged separately, and the stator assembly 20 is a sub-component of the base assembly 10. That is, the component parts of the motor in the related technology are disassembled, so the assembly structure of the base assembly 10 simplifies the follow-up repair and maintenance of the stator assembly 20 and the disassembly process of the rotor assembly 40, thereby reducing the difficulty of disassembly and improving the efficiency of maintenance. At the same time, the stator assembly 20 and the rotor assembly 40 are installed separately, that is, there is no need to install the overall motor in the base assembly 10, and only the stator assembly 20 of the motor is set in the base body, so that the height of the base assembly 10 is reduced, and the height of the food processing device 1 is reduced. In addition, compared to the stator assembly 20 in the related technology, the stator assembly 20 is set to an unclosed structure, which makes the weight of the stator assembly 20 lighter, thereby achieving a lighter weight of the overall product, which is convenient for users to extract and use, and takes up less space. It is also convenient for storage of the food processing device 1.

That is, according to the food processing device 1 provided by the present invention, there is no need to install the overall motor in the base assembly 10, and only the stator assembly 20 of the motor is set in the base body, so that the height of the base assembly 10 is reduced, and the height of the food processing device 1 is reduced. In addition, compared to the stator assembly 20 in the related technology, the stator assembly 20 is set to an unclosed structure, which makes the weight of the stator assembly 20 lighter, thereby achieving a lighter weight of the overall product, which is convenient for users to extract and use, and takes up less space. It is also convenient for storage of the food processing device 1.

Specifically, the stator assembly 20 comprises stator teeth 204, in the stator assembly 20 the surface of the stator assembly 20 corresponding to the end surface of the stator teeth 204 constitutes the stator mating surface 110 of the stator assembly 20. The stator mating surface 110 can be arranged opposite to a part of the outer peripheral surface of the rotor assembly 40 arranged on the cup body assembly 30 of the food processing device 1. That is, the stator assembly 20 used in the present invention is an unclosed structure.

That is, the stator assembly 20 is configured as a structure with openings in the radial direction, and the openings penetrate along the axial direction of the stator assembly 20. Therefore, it is convenient to assemble and separate the stator assembly 20 and the rotor assembly 40 in the food processing device 1, and has the advantage of high disassembly and assembly efficiency.

Specifically, the radial end surface of the stator assembly 20 is fixedly connected to the base body. By fixing and connecting the radial end surface of the stator assembly 20 to the base body, which increases the contact area between the stator assembly 20 and the base body, thereby enhancing the strength of the assembly structure between the stator assembly 20 and the base body.

In detail, the base body comprising: a rotor avoidance area 104, the rotor avoidance area 104 is configured to be suitable for the rotor assembly 40 of the food processing device 1 to be detachably placed on the base body, the stator assembly 20 is arranged around the rotor avoidance area 104, and the opening of the stator assembly 20 is arranged toward the inner side of the rotor avoidance area 104.

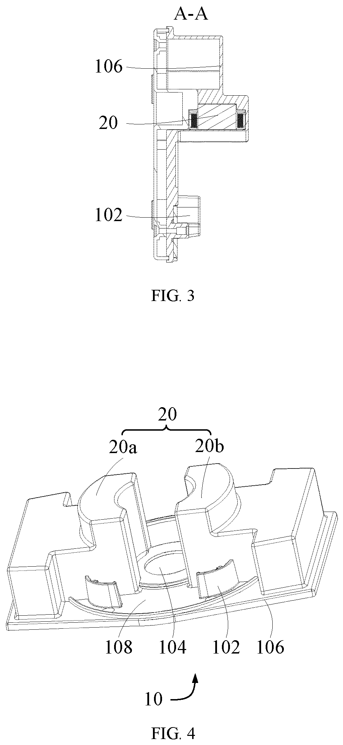

In detail, as shown in Figs. 1 to 3, the number of the stator assembly 20 is at least one; as shown in Fig. 4, based on the situation that there are multiple stator assemblies 20, multiple stator assemblies 20 arranged around the rotor avoidance area 104, the openings of multiple stator assemblies 20 are all facing the rotor avoidance area 104. When the number of stator assembly 20 is one, the stator assembly 20 is provided with a rotor installation groove, the rotor installation groove is ring-shaped, and its center coincides with the rotation center of the rotor assembly 40, so that when the stator is assembled with the rotor, the rotor assembly 40 is located in the rotor installation groove. Based on the situation that there are multiple stator assemblies 20, multiple stator assemblies 20 are arranged around the rotor avoidance area 104. This structure is arranged to ensure that the stator assembly 20 drives the rotor assembly 40 to rotate, and can reduce the input of materials, thereby reducing the production cost. At the same time, since the openings of multiple stator assemblies 20 are facing the rotor avoidance area 104, to ensure the distance of each stator assembly 20 relative to the rotor avoidance area 104, thereby providing power support for the stator assembly 20 to effectively drive the rotation of the rotor assembly 40. Furthermore, multiple stator assemblies 20 are arranged around the rotor avoidance area 104, the area of the stator assemblies 20 surrounding the rotor assembly 40 is increased, thereby increasing the number of the stator teeth 204 that drive the rotor assembly 40, and increasing the stability of the rotor assembly 40. In addition, the number of the stator assemblies 20 can be controlled according to different load conditions, to optimize the torque output and power consumption of the motor.

As shown in Fig. 4, the number of the stator assemblies 20 is two, namely, the first stator assembly 20a and the second stator assembly 20b. The first stator assembly 20a or the second stator assembly 20b can work independently, or the first stator assembly 20a and the second stator assembly 20b can work simultaneously according to the working mode of the food processing device 1. This is conducive to realizing the most reasonable torque output and power consumption of the motor. Of course, the number of stator assemblies 20 is not limited to the above-mentioned example.

In detail, the shell 106 is used to accommodate the stator assembly 20 and the control device, that is, the shell 106 plays a role in protecting the stator assembly 20 and the control device, to avoid collisions with the stator assembly 20 and the control device. And this structural arrangement can prevent moisture, dirt, etc. from entering the base assembly 10. In addition, the control device is connected to the stator assembly 20, to control the on-off of current of the stator assembly 20.

In detail, as shown in Figs. 1 and 4, the base assembly 10 further comprises: a cup placement area 108, being configured to be suitable for a cup body assembly 30 of the food processing device 1 to be detachably placed on the base body; and at least one positioning protrusion 102, disposed in the cup placement area 108. By setting the cup placement area 108 on the base body, that is, the setting position of the stator assembly 20 relative to the cup body assembly 30 is limited after the base assembly 10 and the cup body assembly 30 are assembled, thereby providing effective structural support for the stator assembly 20 to drive the rotor assembly 40 to rotate in the subsequent. In addition, by setting at least one positioning protrusion 102 in the cup placement area 108, when the cup body assembly 30 is placed on the assembly, the positioning protrusion 102 is inserted into the cup body assembly 30, and the positioning protrusion 102 cooperates with the devices in the cup body assembly 30, to limit the assembly stability and reliability of the cup body assembly 30 and the base assembly 10.

Optionally, a buffer layer is provided on the positioning protrusion 102, which can effectively slow down the vibration that acts on the positioning protrusion 102, when the food processing device 1 is working, thereby helping to reduce the operating noise of the product.

Optionally, the shape surrounding the outer edge of the top wall of the positioning protrusion 102 is the same as the shape surrounding the outer edge of the bottom wall of the positioning protrusion 102, and the circumference of the top wall of the positioning protrusion 102 is smaller than the circumference of the bottom wall of the positioning protrusion 102. This structural arrangement makes the positioning protrusion 102 have a guiding effect, so as to reduce the difficulty of assembling the cup body assembly 30 and the base assembly 10, and the operability is strong.

In detail, the rotor avoidance area 104 is located in the cup placement area 108, and the at least one positioning protrusion 102 is disposed around the rotor avoidance area 104. At least one positioning protrusion 102 is arranged around the rotor avoidance area 104, and without interfering with the rotation of the rotor, the positioning protrusion 102 is used to limit the assembly stability and reliability of the cup body assembly 30 and the base assembly 10 in multiple angles, multiple directions, and multiple dimensions.

### Embodiment 2

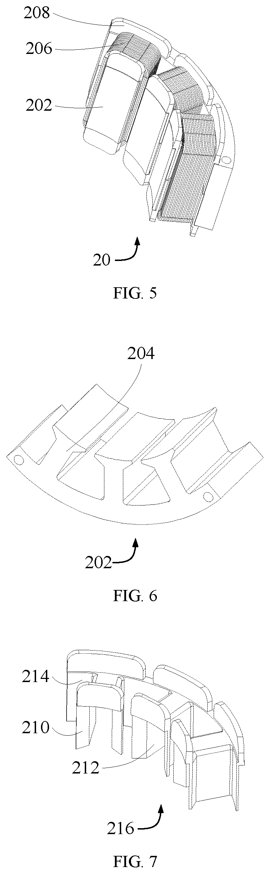

As shown in Figs. 5 to 7, in any one of the above-mentioned embodiments, optionally, the stator assembly 20 comprises a stator core 202, a stator winding 206, a magnetism judging device, and an insulator piece 208.

Wherein, the stator assembly 20 is configured as a structure having an opening in the radial direction, and the opening penetrates along the axial direction of the stator assembly 20, and the radial end surface of the stator assembly 20 is fixedly connected to the base body. The stator core 202 has stator teeth 204, and the stator winding 206 is set on the stator teeth 204. The magnetism judging device is set along the circular direction of the rotor assembly 40, to obtain the rotation direction of the rotor assembly 40 relative to the stator assembly 20, the insulator piece 208 is set on the stator core 202, and the insulator piece 208 is used to isolate the stator core 202 and the stator winding 206.

In detail, the number of the stator assembly 20 is one, the stator assembly 20 comprises a stator core 202, the stator core 202 has at least two stator teeth 204, and each stator teeth 204 is provided with a stator winding 206. The stator winding 206 can generate a magnetic field when energized, and the rotor assembly 40 rotates under the action of the magnetic field; wherein, the stator winding 206 is used to generate a magnetic field when connected to the power supply.

In detail, the number of the stator assemblies 20 is at least two, the stator assembly 20 comprises a stator core 202, the stator core 202 has at least one stator teeth 204, and the stator teeth 204 is provided with a stator winding 206. The stator winding 206 can generate a magnetic field when energized, and the rotor assembly 40 rotates under the action of the magnetic field; wherein, the stator winding 206 is used to generate a magnetic field when connected to the power supply.

Optionally, ends of the stator teeth 204 close to the rotor assembly 40 are at same distance from a rotation center of the rotor assembly 40. The distance between each stator teeth 204 and the axis of the rotor assembly 40 is equal, which further ensures that the magnetic field generated by each stator winding 206 has the same magnetic force on the rotor assembly 40.

Optionally, the number of the stator teeth 204 is two, and stator windings 206 on the two stator teeth 204 are sequentially energized and have same polarities; or the number of the stator teeth 204 is two, stator windings 206 on the two stator teeth 204 are energized at the same time with different polarities, and magnetic poles of the stator windings 206 on the two stator teeth 204 are alternated. When setting two stator teeth 204 in the stator assembly 20, there are two solutions for driving the rotor assembly 40, one of which is that the stator windings 206 on the two stator teeth 204 are energized sequentially; and the two stator windings 206 generate the same polarity when they are energized. According to the principle of magnetic attraction, the magnetic force generated by the stator winding 206 acts on the rotor assembly 40 to make it rotate, and the two stator windings 206 are energized sequentially, so that the two stator windings 206 sequentially generate a force on the rotor assembly 40, thereby driving the rotor assembly 40 to continuously rotate. The other one is that the stator windings 206 on the two stator teeth 204 are energized at the same time, and the two stator windings 206 generate different polarities when they are energized. The magnetic force generated by the stator winding 206 acts on the rotor assembly 40 to make it rotate. In addition, during the process of energizing and controlling the rotation of the rotor assembly 40, the polarities of the two stator windings 206 alternately change, so that the two stator windings 206 sequentially generate magnetic forces of different polarities. That is, the two stator windings 206 sequentially exert forces on different magnetic poles on the rotor assembly 40, thereby driving the rotor assembly 40 to continuously rotate. It is understandable that when setting the stator assembly 20, the setting solutions of two stator windings 206 can be selected according to the actual situation and work requirements, which further strengthens the setting flexibility of the stator assembly 20 of the motor and improves the applicability of the motor.

In detail, by setting the magnetism judging device in the circular direction of the rotor assembly 40, the rotation direction of the rotor assembly 40 can be judged when the motor is running.

Optionally, the number of the stator teeth 204 is greater than or equal to 3, and polarities of the stator windings 206 on any two adjacent stator teeth 204 are different. When the number of stator teeth 204 is greater than or equal to 3, optionally, the two adjacent stator windings 206 are energized together, and the polarities of the two windings are reversed, so that the rotor assembly 40 is subjected to a force in a tangential direction, and realizing to provide power to the rotation of the rotor assembly 40.

Optionally, the insulator piece 208 comprises a first sub-insulator piece 216 and a second sub-insulator piece, the first sub-insulator piece 216 and the second sub-insulator piece are hollow structures. In this way, the first sub-insulator piece 216 and the second sub-insulator piece are made to cover the stator core 202 from the upper and lower directions, respectively. This structure arrangement facilitates the assembly of the stator core 202 and the insulator piece 208.

Optionally, the insulator piece 208 comprises a first insulating part 210, a second insulating part 212 and a third insulating part 214. The first insulating part 210 is attached to the surface of the stator core 202 to cover the surface of the stator core 202. The second insulating part 212 is connected to the first insulating part 210, and the second insulating part 212 is sleeved on the side wall of the stator teeth 204 to cover the side wall of the stator core 202. The third insulating part 214 is connected to the first insulating part 210, and the third insulating part 214 extends from the surface of the first insulating part 210 in a direction away from the stator core 202 to cover multiple stator windings 206. This structural arrangement can prevent at least two stator windings 206 from being electrically connected to the stator core 202, and improve the stability of the stator winding 206 during operation.

### Embodiment 3

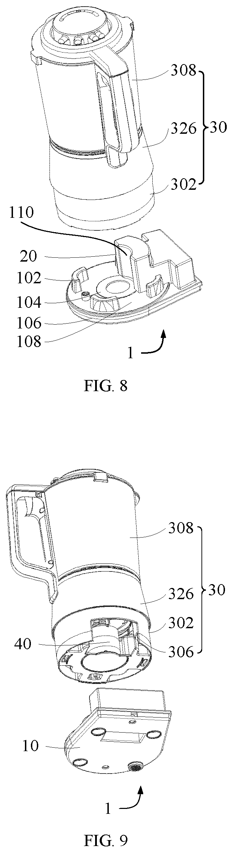

As shown in Figs. 8 to 10, the food processing device 1 according to the embodiment comprises: a base body, a cup body assembly 30 and a cutter assembly 50. Wherein the cup body assembly 30 is provided with a rotor assembly 40, the rotor assembly 40 is configured to be suitable for being driven by the stator assembly 20, and the cup body assembly 30 is configured to be suitable for being detachably installed on the base assembly 10.

In detail, the food processing device 1 comprises a cup body assembly 30 and a base assembly 10. Wherein, the cup body assembly 30 is provided with a rotor assembly 40, the rotor assembly 40 is configured to be suitable for being driven by a stator assembly 20, and the cup body assembly 30 is configured to be suitable for being detachably installed on the base assembly 10. That is, the assembly structure of the stator and the rotor in the related technology is changed, so that the stator assembly 20 and the rotor assembly 40 are separately arranged, the stator assembly 20 is used as a sub-component of the base assembly 10, and the rotor assembly 40 is used as a sub-component of the cup body assembly 30. That is, the component parts of the motor in the related art are disassembled, so the cooperation of the stator assembly 20 and the rotor assembly 40 has the advantages of simple structure and low production cost. In addition, since the stator assembly 20 and the rotor assembly 40 are arranged separately, the assembly structure of the stator assembly 20 and the rotor assembly 40 simplifies the follow-up repair and maintenance of the stator assembly 20 and the disassembly process of the rotor assembly 40, thereby reducing the difficulty of disassembly and improving the efficiency of maintenance.

In detail, in the related art, the motor is set on the base as a whole, and the motor drives the active disk on the base to rotate and then drives the driven disk in the cup body to rotate, so as to finally realize the purpose of using the driven disk to drive the cutter to rotate; or the motor is connected to the cutter in the cup body through a coupling, which drives the cutter to rotate. That is, the motor is indirectly connected to the cutter through a coupling or two disks. This structural arrangement makes the rotary shaft of the motor and the cutter shaft of the cutter have a problem of inconsistency, so vibration and noise will be generated when the product is used. The stator assembly 20 and the rotor assembly 40 are arranged separately. The rotor assembly 40 is a sub-component of the cup body assembly 30, so it is directly connected to the cutter assembly 50 located in the cup body assembly 30 through the rotary shaft 402 of the rotor assembly 40. Furthermore, the rotor assembly 40 is used to directly drive the cutter assembly 50 to rotate, of course, the direct connection solution between the cutter assembly 50 and the rotary shaft 402 is more effective, but it does not rule out that the cutter assembly 50 is connected to the rotary shaft 402 through other devices. Compared with the assembly structure in the related technology, the rotor assembly 40 directly drives the cutter assembly 50 to rotate, eliminating the two disks or coupling, so the height of the whole machine can be reduced, and it also overcomes the poor experience in the related technology that is not easy to take out between the base and the cup body assembly 30 caused by the magnetic attraction between the two disks.

### Embodiment 4

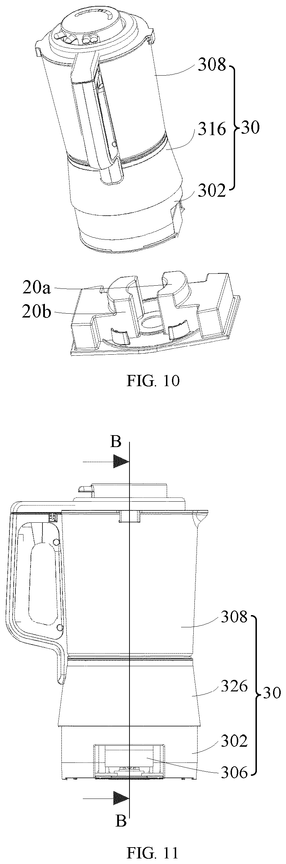

As shown in Figs. 11 to 15, the food processing device 1 according to the embodiment comprises: a base body, a cup body assembly 30 and a cutter assembly 50.

The cup body assembly 30 comprises a cup body 308, a cutter head assembly 312, a connecting shell 316, a connecting part 318, an installing part 320, a positioning column 322 and a connector piece 330. Wherein, the avoidance gap 306 is set on the cup body bottom shell, and when the cup body assembly 30 is placed on the base assembly 10, the stator assembly 20 passes through the avoidance gap 306 and extends into the cup body assembly 30. The stator assembly 20 covers a part of the outer surface of the rotor in the circular direction. Both ends of the cup body 308 are provided with a cup body opening 310, respectively; one end of the connecting shell 316 fixedly connected to the cup body 308, and another one end of the connecting shell 316 connected to the cup body bottom shell; and a cutter head assembly 312 is disposed in the connecting shell 316 and is located at the connecting shell opening 328 of the connecting shell 316, and can cover the connecting shell opening 328, and the cutter head assembly 312 is provided with a through hole 324, a second end of the rotary shaft 402 passes through the through hole 324, and the cutter assembly 50 is disposed on the second end of the rotary shaft 402 and is located above the cutter head assembly 312. The outer side wall of the connecting part 318 is gradually inclined from the top end of the connecting part 318 to the bottom end of the connecting part 318 toward the center line of the cup body 308, and an external thread is provided on an outer side wall of the connecting part 318, the connecting shell 316 is provided with an installing part 320 adapted to the connecting part 318, an inner side wall of the installing part 320 is provided with an inner thread matching with the external thread, and the connecting part 318 is screwed on the installing part 320. At least one positioning column 322 is disposed on the cup body bottom shell, the at least one positioning column 322 extends in a direction away from the base assembly 10, respectively, and the at least one positioning column 322 is a hollow structure, a positioning protrusion 102 of the base assembly 10 is aligned with the positioning column 322, and when the cup body assembly 30 is placed on the base assembly 10, the positioning protrusion 102 is inserted into the positioning column 322.

In detail, by setting an avoidance gap 306 on the cup body bottom shell, so that when the cup body assembly 30 is placed on the base assembly 10, the stator assembly 20 passes through the avoidance gap 306 and extends into the cup body assembly 30, thereby the stator assembly 20 reaches the mating area with the rotor assembly 40. Thereby the stator assembly 20 covers a part of the outer surface of the rotor in the circular direction. The setting of the avoidance gap provides effective structural support for the cooperation of the stator assembly 20 and the rotor assembly 40.

Optionally, the position of the avoidance gap 306 can be set according to specific actual use requirements, so that at least a part of the avoidance gap 306 is formed on the bottom wall of the cup body bottom shell. For example, the avoidance gap is formed on the bottom wall of the cup body bottom shell (not shown in the figures). For another example, a part of the avoidance gap 306 is formed on the bottom wall of the cup body bottom shell, and another part of the avoidance gap 306 is formed on the side wall of the cup body bottom shell.

Optionally, based on a situation that there are multiple stator assemblies 20, the number of the avoidance gaps 306 is the same as the number of the stator assemblies 20, and the multiple stator assemblies 20 pass through the multiple avoidance gaps 306 and are disposed around an outer side of the rotor assembly 40.

Optionally, the number of the stator assemblies 20 is multiple, and the number of the avoidance gaps 306 is the same as the number of the stator assemblies 20, and multiple stator assemblies 20 pass through multiple avoidance gaps 306 and are arranged around the outside of the rotor assembly 40. For example, as shown in Fig. 10, the number of stator assemblies 20 is two, and the number of avoidance gaps 306 is two. The first stator assembly 20a and the second stator assembly 20b respectively pass through two avoidance gaps 306, and are arranged around the outside of the rotor assembly 40. Thereby increasing the area, region and angle of stator assembly 20 surrounding rotor assemblies 40. In this way, the work quantity of the stator assembly 20 can be controlled according to different load conditions. For example, the first stator assembly 20a or the second stator assembly 20b can be operated independently, or the first stator assembly 20a and the second stator assembly 20b can be operated simultaneously, according to the working mode of food processing device 1. This is conducive to optimizing the torque output and power consumption of the motor. Of course, the number of stator assemblies 20 and the avoidance gaps 306 is not limited to the above-mentioned example.

In detail, the cup body assembly 30 further comprising: a cup body 308, a connecting shell 316 and a cutter head assembly 312. By limiting the setting position of the cutter head assembly 312 relative to the connecting shell 316, the cutter head assembly 312 is located at the bottom of the connecting shell 316, and the cutter head assembly 312 is located at the connecting shell opening 328 of the connecting shell 316, and the connecting shell opening 328 can be covered, thereby ensuring the tightness of the space containing the ingredients. In addition, making the second end of the rotary shaft 402 pass through the through hole, and then connect with the cutter assembly 50, so that the cutter assembly 50 is located above the cutter head assembly 312. That is, the relative position of the cutter head assembly 312 and the cutter assembly 50 is limited, the contact position of the food material and the cutter assembly 50 is ensured, and an effective space guarantee is provided for the crushing effect of the food material.

In detail, by setting the connecting part 318 on the cup body 308, and the installing part 320 that is adapted to the connecting part 318 on the connecting shell 316, and the external thread is set on the outer wall of the connecting part 318, and the inner wall of the installing part 320 is provided with the inner thread cooperating with the external thread. In this way, the cup body 308 and the connecting shell 316 are assembled together through the cooperation of the connecting part 318 and the installing part 320. In addition, the outer side wall of the connecting part 318 is gradually inclined from the top of the connecting part 318 to the bottom of the connecting part 318 toward the center line of the cup body 308. This structural arrangement makes the outer wall of the connecting part 318 have a guiding effect with respect to the installing part 320, which simplifies the difficulty of assembling the connecting part 318 and the installing part 320, and helps to improve the assembly efficiency.

Optionally, one end of the decorating shell 326 snapped to the connecting shell 316, and another end of the decorating shell 326 snapped to the cup body bottom shell, so that the connecting shell 316 and the cup body bottom shell being fixedly connected. The structural arrangement of the decorating shell 326 can ensure a smooth transition from the cup body 308 to the cup body bottom shell, thereby ensuring the visibility and beauty of the appearance of the cup body assembly 30. At the same time, the setting of the decorating shell 326 can play a role in shielding the internal connecting devices of the cup body 308, the connecting shell 316 and the cup body bottom shell, thereby ensuring the visibility and beauty of the appearance of the cup body assembly 30. Of course, the decorating shell 326 can also be constructed as an inverted cone or prism.

In detail, the base assembly 10 is also provided with a positioning protrusion 102; the positioning protrusion 102 is aligned with the positioning column 322. When cup body assembly 30 is placed on the base assembly 10, the positioning protrusion 102 is inserted into the positioning column 322. The hollow structural arrangement of the positioning column 322 makes when the positioning protrusion 102 inserted into the positioning column 322, the positioning column 322 can wrap the positioning protrusion 102. In this way, the positioning column 322 is implemented to limit the shaking of the positioning protrusion 102 in multiple directions, multiple angles and multiple dimensions, thereby enhancing the firmness of the assembly of the two. In this way, even if the vibration generated by the food processing device 1 is large, it will not separate the cup body assembly 30 from the base assembly 10.

Optionally, at least one of the outer wall of the positioning protrusion and the inner wall of the positioning column is provided with a buffer layer (not shown in the Figures), which can effectively slow down the vibration that acts on the positioning protrusion and the positioning column when the food processing device is working, thereby helping to reduce the operating noise of the product.

### Embodiment 5

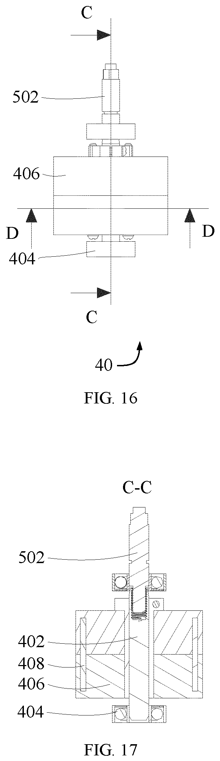

As shown in Figs. 16 to 18, the food processing device 1 according to the embodiment comprises: a base body, a cup body assembly 30 and a cutter assembly 50, and the cup body assembly 30 is provided with a rotor assembly 40.

The rotor assembly 40 comprises: a rotary table 406, a rotary shaft 402, a magnetic piece 408, and a bearing 404. Wherein, the rotary table 406 is disc-shaped, the rotary table 406 is provided with an accommodating space, and the rotary shaft 402 is inserted into the center of the rotary table 406, the magnetic piece 408 is set in the accommodating space, and the magnetic piece 408 is evenly distributed along the circular direction of the rotary table 406.

In detail, the rotor assembly 40 comprises a rotary table 406, a rotary shaft 402, and multiple magnetic pieces 408, wherein the rotary table 406 is a non-magnetically conductive rotary table by default, which eliminates the rotor core structure made of silicon steel sheets in the related technology, which not only helps reduce the weight of the motor, but also eliminates that in the related technology, the need for the magnetic field on the rotor core laminated in the axial direction, to pass through the teeth and the yoke of the stator and the rotor to form a magnetic field loop, so the closed magnetic field lines must be curved, and there will be greater leakage and loss. Furthermore, the magnetic piece 408 is arranged in the accommodating space 406 of the rotary table, which can reduce the space occupancy rate and improve the installation firmness of the magnetic piece 408. Optionally, the number of the magnetic piece 408 is one and is ring-shaped; or the number of the magnetic pieces 408 is multiple, and multiple magnetic pieces 408 are distributed around a rotation center line of the rotary table 406 in the circular direction.

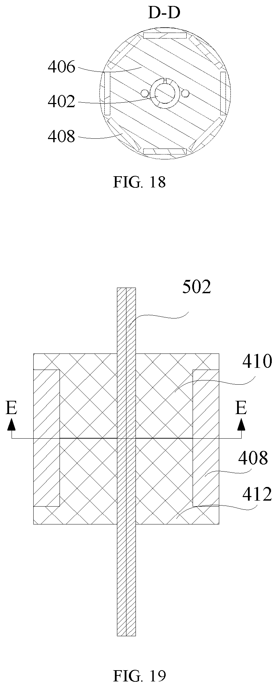

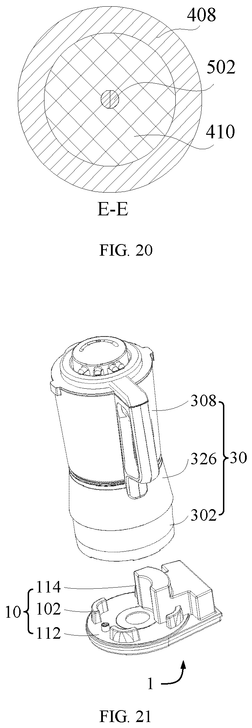

Specifically, as shown in Figs. 19 and 20, the number of magnetic piece 408 is one, the magnetic piece 408 is ring-shaped, and a magnetic ring is used, that is, the upper plate body 410 and the lower plate body 412 together form the rotary table 406. And set the magnetic ring on the radial outer circumference of the upper plate body 410 and the lower plate body 412. Or, as shown in Fig. 18, the number of magnetic pieces 408 is multiple, and multiple magnetic pieces 408 are distributed around the rotation center line of rotary table 406 in circular direction of.

Optionally, the number of at least two stator windings 206 of the stator assembly 20 is 3N, and magnetic poles of the multiple magnetic pieces 408 is 4M, wherein N is a positive integer and M is a positive integer. The number of the stator windings 206 is limited, that is, the number of the stator windings 206 is an integer multiple of 3, and the magnetic poles of the magnetic pieces 408 in the rotor assembly 40 is an integer multiple of 4. This arrangement makes the generated magnetic field more stable, so that the stator assembly 20 can better cooperate with the rotor assembly 40, thereby the output efficiency of the motor is higher.

### Embodiment 6

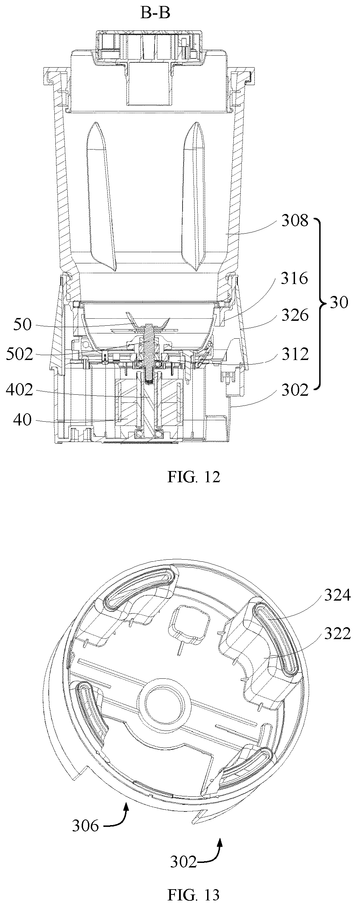

As shown in Figs. 12 and 17, in any one of the above-mentioned embodiments, optionally, the cutter assembly 50 comprises at least one blade and a cutter shaft 502.

Wherein, at least one blade is directly or indirectly arranged on the rotary shaft 402, at least one blade is arranged on the cutter shaft 502, the cutter shaft 502 is connected with the rotary shaft 402, or the cutter shaft 502 and the rotary shaft 402 are integrated structure.

In detail, at least one blade is directly or indirectly disposed on the rotary shaft. When the cutter assembly 50 rotates, at least one blade cooperates with each other to achieve the purpose of cutting food materials in multiple directions and multiple angles at the same time. The present invention makes at least one blade to be directly set on the rotary shaft 402 through reasonable settings, that is, to achieve the purpose of the rotary shaft 402 to directly drive at least one blade to rotate. This structural arrangement avoids the investment of devices connecting the rotary shaft 402 and the blade, which is beneficial to reduce the height of the whole machine, and because of the reduction of material investment, the production cost of the product can be reduced; or when at least one blade is installed indirectly on the rotary shaft 402, in this way, when the blade is replaced, only the blade can be removed from the device connected to the rotary shaft 402 and the blade. It can reduce the amount of wear on the connection between the rotary shaft 402 and the device, which is beneficial to prolong the service life of the rotary shaft 402.

Optionally, the side wall of the rotary shaft in circular direction is provided with multiple sockets (not shown in the figure), and the multiple sockets are located on the same plane, the number of blades is the same as the number of sockets, and the multiple blades are inserted into the multiple sockets. Alternatively, the side wall of the rotary shaft in circular direction is provided with multiple sockets, and the multiple sockets are arranged at intervals along the axial direction of the rotary shaft, the number of blades is the same as the number of sockets, and the multiple blades are inserted into the multiple sockets.

In detail, by setting the cutter shaft 502, at least one blade is set on the cutter shaft 502, and the cutter shaft 502 is connected with the rotary shaft 402, that is, the indirect connection between the rotary shaft 402 and the blade is realized; the cutter shaft 502 and the rotary shaft 402 are an integrated structure, that is, the direct connection between the rotary shaft 402 and the blade is realized.

Optionally, the food processing device 1 comprises but not limited to the following electrical appliances: blender, wall breaker, soymilk machine, cooking machine, chef machine and cookers.

### Embodiment 7

As shown in Figs. 2, 3 and 8 to 12, the food processing device 1 according to an embodiment comprises a base assembly 10, a cup body assembly 30, and a cutter assembly 50.

Wherein, a stator assembly 20 is provided on the base assembly 10; a rotor assembly 40 is provided on the cup body assembly 30, the rotor assembly 40 is configured to be suitable for being driven by a stator assembly 20, and the cup body assembly 30 is configured to be suitable for being detachably installed on the base assembly 10. The cutter assembly 50 is set in the cup body assembly 30, and the cutter assembly 50 is connected to the rotary shaft 402 of the rotor assembly 40, and the rotor assembly 40 can drive the cutter assembly 50 to rotate.

In detail, by reasonably setting the composition structure of the food processing device 1, the base assembly 10 is provided with a stator assembly 20, and the cup body assembly 30 is provided with a rotor assembly 40, that is, the stator assembly 20 is used as a component of the base assembly 10, and the rotor assembly 40 As a component of the cup body assembly 30. This structure realizes the split assembly structural arrangement of the stator assembly 20 and the rotor assembly 40, and changes the composition structure of the motor in the related technology. For example, the motor is assembled into the base assembly as a whole power part, which makes it difficult to disassemble the stator and the rotor. Therefore, the food processing device 1 has the advantages of simple structure and low production cost. In addition, because the stator assembly 20 and the rotor assembly 40 are arranged separately, the assembly structure of the stator assembly 20 and the rotor assembly 40 simplifies the follow-up repair and maintenance of the stator assembly 20 and the disassembly process of the rotor assembly 40, thereby reducing the difficulty of disassembly and improving the efficiency of maintenance.

In the related art, the motor is set on the base as a whole, and the motor drives the active disk on the base assembly to rotate and then drives the driven disk in the cup body to rotate, so as to finally realize the purpose of using the driven disk to drive the cutter to rotate; or the motor is connected to the cutter in the cup body through a coupling, which drives the cutter to rotate. That is, the motor is indirectly connected to the cutter through a coupling or two disks. This structural arrangement makes the rotary shaft of the motor and the cutter shaft of the cutter have a problem of inconsistency, so vibration and noise will be generated when the product is used. The stator assembly 20 and the rotor assembly 40 are arranged separately. The rotor assembly 40 is a subcomponent of the cup body assembly 30, so it is directly connected to the cutter assembly 50 located in the cup body assembly 30 through the rotary shaft 402 of the rotor assembly 40. Furthermore, the rotor assembly 40 is used to directly drive the cutter assembly 50 to rotate (of course, the direct connection solution between the cutter assembly 50 and the rotary shaft 402 is more effective, but it does not rule out that the cutter assembly 50 is connected to the rotary shaft 402 through other devices). Compared with the assembly structure in the related technology, the rotor assembly 40 directly drives the cutter assembly 50 to rotate, eliminating the two disks or coupling, so the height of the whole machine can be reduced, and it also overcomes the poor experience in the related technology that is not easy to take out between the base assembly and the cup body assembly caused by the magnetic attraction between the two disks.

In addition, the mating surface of the stator assembly 20 and the rotor assembly 40 in the food processing device provided by the present invention is a mating surface, and the mating surface is arranged opposite to a part of the outer peripheral surface of the rotor assembly 40, that is, the stator assembly 20 does not completely surround the rotor assembly 40, so that the rotor assembly 40 can be easily separated from the stator assembly 20 along its radial direction or axial direction. Specifically, since the mating surface and a part of the outer peripheral surface of the rotor assembly 40 are arranged opposite to each other, that is, the stator assembly 20 is an unclosed structure, and the rotor assembly 40 can be separated from the stator assembly 20. Compared with the closed annular stator structure in the related art, the stator assembly 20 is only arranged opposite to a part of the outer peripheral surface of the rotor assembly 40, so that the rotor assembly 40 can be separated from the stator assembly 20 in the radial direction. Therefore, the easy, fast and convenient split design of the base assembly 10 and the cup body assembly 30 is realized.

Wherein, the rotor assembly 40 can be separated from the stator assembly 20, that is, there is no need to install the overall motor in the base assembly 10, and only the stator assembly 20 of the motor is set in the base assembly 10, so that the height of the base assembly 10 is reduced, and the height of the food processing device 1 is reduced. In addition, compared to the stator assembly 20 in the related technology, the stator assembly 20 is set to an unclosed structure, which makes the weight of the stator assembly 20 lighter, thereby achieving a lighter weight of the overall product, which is convenient for users to extract and use, and takes up less space. It is also convenient for storage of the food processing device 1. Specifically, the surface of the stator assembly 20 corresponding to the end surface of the stator teeth 204 constitutes the mating surface of the stator assembly 20.

Optionally, the base assembly 10 is provided with a body 112 and a cover plate 114, the cover plate 114 is covered on the body 112, the body 112 and the cover plate 114 are combined to form a cavity to be suitable for accommodating the stator assembly 20, and the shape of the cover plate 114 matches the shape of the stator assembly 20.

### Embodiment 8

As shown in Figs. 2, 3 and 8 to 12, the food processing device 1 according to an embodiment comprises a base assembly 10, a cup body assembly 30 and a cutter assembly 50; the base assembly 10 comprises a cup placement area 108.

Wherein, the cup placement area 108 is configured to be suitable for the cup body assembly 30 to be detachably placed on the base assembly 10, and the stator assembly 20 is located on one side of the cup placement area 108.

In detail, by setting the cup placement area 108 on the base assembly 10, the stator assembly 20 is located on one side of the cup placement area 108, which defines the setting position of the stator assembly 20 relative to the cup body assembly 30 after the base assembly 10 and the cup body assembly 30 are assembled, and then provides effective structural support for the stator assembly 20 to drive the rotor assembly 40 to rotate in the subsequent.

Optionally, the stator assembly 20 can be located inside the cup body assembly 30, or the stator assembly 20 can be located outside the cup body assembly 30 (not shown in the figures).

In detail, the number of the stator assembly 20 is at least one, and the number of the stator assembly 20 can be set according to the actual situation. When the stator assembly 20 is one, under the condition of ensuring the using function of the product, reduce the input of materials and reduce the production cost. When there are multiple stator assemblies 20, the number of work of the stator assemblies 20 can be controlled according to different load conditions. As shown in Fig. 10, the number of the stator assemblies 20 is two, namely, the first stator assembly 20a and the second stator assembly 20b. The first stator assembly 20a or the second stator assembly 20b can work independently, or the first stator assembly 20a and the second stator assembly 20b can work simultaneously according to the working mode of the food processing device 1. This is conducive to realizing the most reasonable torque output and power consumption of the motor. Of course, the number of stator assemblies 20 is not limited to the above example.

### Embodiment 9

As shown in Figs. 2, 3 and 8 to 12, the food processing device 1 according to an embodiment comprises a base assembly 10, a cup body assembly 30 and a cutter assembly 50, the base assembly 10 comprises a cup placement area 108, the cup body assembly 30 comprises a cup body bottom shell 302, a rotor installing area 332 and an avoidance gap 306.

Wherein, the rotor installing area 332 is set on the cup body bottom shell 302, the rotor assembly 40 is rotatably set on the rotor installing area 332, and the projection of the rotor assembly 40 on the cup body bottom shell 302 constructs the rotor installing area 332; the avoidance gap 306 is set on cup body bottom shell 302; when the cup body assembly 30 is placed on base assembly 10, the stator assembly 20 passes through the avoidance gap 306 and extends into cup body assembly 30.

In detail, the projection of the rotor assembly 40 on the cup body bottom shell 302 constructs the rotor installing area. By reasonably restricting the position of the rotor installing area 332, the rotation area of the rotor assembly 40 is indirectly limited. In this way, a reliable and sufficient rotation space is provided for the rotation of the rotor assembly 40, thus ensuring the operating stability, safety and reliability of the rotor assembly 40.

Optionally, the rotor installing area 332 is located in the middle of the cup body bottom shell 302, and the rotor installing area can also be located at the edge of the cup body bottom shell (not shown in the figures). Here, examples are not listed one by one.

In detail, the avoidance gap 306 is set on the cup body bottom shell 302. In this way, when the base assembly 10 and the cup body assembly 30 are assembled, the stator assembly 20 passes through the avoidance gap 306 and extends into the cup body assembly 30, so that the stator assembly 20 reaches the matching area with the rotor assembly 40. The setting of the avoidance gap 306 provides effective structural support for the cooperation of the stator assembly 20 and the rotor assembly 40. Optionally, the position of the avoidance gap 306 can be set according to specific actual use requirements, so that at least a part of the avoidance gap 306 is formed on the bottom wall of the cup body bottom shell. For example, the avoidance gap is formed on the bottom wall of the cup body bottom shell. For another example, a part of the avoidance gap 306 is formed on the bottom wall of the cup body bottom shell, and another part of the avoidance gap 306 is formed on the side wall of the cup body bottom shell.

### Embodiment 10

The food processing device 1 according to an embodiment comprises: a base assembly 10, a cup body assembly 30 and a cutter assembly 50, the base assembly 10 comprises a cup placement area 108; the cup body assembly 30 comprises a cup body bottom shell 302, a rotor installing area 332 and an avoidance gap 306.

Wherein, the rotor installing area 332 is set on the cup body bottom shell 302, and the rotor assembly 40 is rotatably disposed on the rotor installing area 332, and the projection of the rotor assembly 40 on the cup body bottom shell 302 constructs the rotor installing area 332; the avoidance gap 306 is located outside the rotor installing area 332, and when the cup body assembly 30 is placed on the base assembly 10, the stator assembly 20 passes through the avoidance gap 306 and is located outside the rotor assembly 40; or based on the situation that the number of the stator assemblies 20 is multiple, the number of avoidance gaps 306 is the same as the number of the stator assemblies 20, and the multiple stator assemblies 20 pass through the multiple avoidance gaps 306 and are disposed on outside of the rotor assembly 40.

In detail, the rotor installing area 332 is located in the middle of the cup body bottom shell 302, and the avoidance gap 306 is located at the edge of the cup body bottom shell 302. By reasonably setting the position of the avoidance gap 306, the avoidance gap 306 is located outside the rotor installing area 332. In this way, when the cup body assembly 30 is assembled with the base assembly 10, the stator assembly 20 passes through the avoidance gap 306 and is located outside the rotor assembly 40, that is, the setting of the avoidance gap 306 defines the assembly position of the stator assembly 20 relative to the rotor assembly 40. That is, the avoidance gap 306 limits the movement path of the stator assembly 20 in the cup body assembly 30, so that the stator assembly 20 is inserted into the cup body assembly from the edge of the cup body bottom shell 302, and is further cooperated with the rotor assembly 40 located in the middle of the cup body assembly 30. This structure arrangement provides a reliable and safe structural guarantee for the stator assembly 20 to drive the rotor assembly 40 to rotate. Of course, the position setting of the avoidance gap 306 and the rotor installing area 332 is not limited to the above-mentioned examples, and the avoidance gap 306 may be located in the middle of the cup body bottom shell 302, and the rotor installing area 332 is located at the edge of the cup body bottom shell 302. Here, examples are not listed one by one.

Optionally, the number of the stator assemblies 20 is multiple, and the number of the avoidance gaps 306 is the same as the number of the stator assemblies 20, and multiple stator assemblies 20 pass through multiple avoidance gaps 306 and are arranged around the outside of the rotor assembly 40. For example, as shown in Fig. 10, the number of stator assemblies 20 is two, and the number of avoidance gaps 306 is two. The first stator assembly 20a and the second stator assembly 20b respectively pass through two avoidance gaps 306, and are arranged around the outside of the rotor assembly 40. Thereby increasing the area of stator assembly 20 surrounding rotor assemblies 40. Thereby increasing the amount of the stator teeth 204 driving the rotor assembly 40 and increasing the operation stability of the rotor assembly 40. In addition, the work quantity of the stator assembly 20 can be controlled according to different load conditions. For example, the first stator assembly 20a or the second stator assembly 20b can be operated independently, or the first stator assembly 20a and the second stator assembly 20b can be operated simultaneously according to the working mode of food processing device 1. This is conducive to optimizing the torque output and power consumption of the motor. Of course, the number of stator assemblies 20 and the avoidance gaps 306 is not limited to the above-mentioned example.

### Embodiment 11

The food processing device 1 according to an embodiment comprises a base assembly 10, a cup body assembly 30 and a cutter assembly 50, the base assembly 10 comprises a cup placement area 108, and the cup body assembly 30 comprises a cup body bottom shell 302, a rotor installing area 332 and an avoidance gap 306.

Wherein, the avoidance gap 306 is located inside the rotor installing area 332, and when the cup body assembly 30 is placed on the base assembly 10, the stator assembly 20 passes through the avoidance gap 306 and is located inside the rotor assembly 40 (not shown in the figures).

In detail, the avoidance gap 306 is located inside the rotor installing area 332. When the cup body assembly 30 is placed on the base assembly 10, the stator assembly 20 passes through the avoidance gap 306 and is located inside the rotor assembly 40. By reasonably setting the position of the avoidance gap 306, the avoidance gap 306 is located inside the rotor installing area 332. In this way, when the cup body assembly 30 is assembled with the base assembly 10, the stator assembly 20 passes through the avoidance gap 306 and is located inside the rotor assembly 40, that is, the setting of the avoidance gap 306 defines the assembly position of the stator assembly 20 relative to the rotor assembly 40. That is, the avoidance gap 306 defines the movement path of the stator assembly 20 in the cup body assembly 30, and provides a reliable and safe structure guarantee for the stator assembly 20 to drive the rotor assembly 40 to rotate.

### Embodiment 12

As shown in Figs. 2, 3, 22 and 8 to 15, in any one of the above-mentioned, optionally, the cup body assembly 30 also comprises a cup body 308, a cutter head assembly 312, a connecting shell 316, a connecting part 318, an installing part 320, a positioning column 322 and a connector piece 330.

Both ends of the cup body 308 are provided with a cup body opening 310, respectively; one end of the connecting shell 316 fixedly connected to the cup body 308, and another one end of the connecting shell 316 connected to the cup body bottom shell 302; and a cutter head assembly 312 is disposed in the connecting shell 316 and is located at the connecting shell opening 328 of the connecting shell 316, and can cover the connecting shell opening 328, and the cutter head assembly 312 is provided with a through hole 324, a second end of the rotary shaft 402 passes through the through hole 324, and the cutter assembly 50 is disposed on the second end of the rotary shaft 402 and is located above the cutter head assembly 312. The outer side wall of the connecting part 318 is gradually inclined from the top end of the connecting part 318 to the bottom end of the connecting part 318 toward the center line of the cup body 308, and an external thread is provided on an outer side wall of the connecting part 318, the connecting shell 316 is provided with an installing part 320 adapted to the connecting part 318, an inner side wall of the installing part 320 is provided with an inner thread matching with the external thread, and the connecting part 318 is screwed on the installing part 320. The positioning column 322 extends along a positioning hole on the cup body assembly 30 in a direction away from the base assembly 10, the positioning column 322 is configured as a hollow structure with one end open, and a top of the positioning column 322 being provided with a through hole 324; a connector piece 330 is provided on another one end of the connecting shell 316, and the connector piece 330 passes through an inside of the through hole 324 and extends into the positioning column 322; and one end of the decorating shell 326 is snapped to the connecting shell 316, and another end of the decorating shell 326 is snapped to the cup body bottom shell 302, so that the connecting shell 316 and the cup body bottom shell 302 are fixedly connected.

In detail, the cup body assembly 30 further comprises a cup body 308, a connecting shell 316 and a cutter head assembly 312. By limiting the setting position of the cutter head assembly 312 relative to the connecting shell 316, the cutter head assembly 312 is located at the bottom of the connecting shell 316, and the cutter head assembly 312 is located at the connecting shell opening 328 of the connecting shell 316, and the connecting shell opening 328 can be covered, thereby ensuring the tightness of the space containing the ingredients. In addition, making the second end of the rotary shaft 402 pass through the through hole 324, and then connect with the cutter assembly 50, so that the cutter assembly 50 is located above the cutter head assembly 312. That is, the relative position of the cutter head assembly 312 and the cutter assembly 50 is limited, the contact position of the food material and the cutter assembly 50 is ensured, and an effective space guarantee is provided for the crushing effect of the food material.

Optionally, the cup body 308 is constructed as a cone, the cup body bottom shell 302 is constructed as a cylinder, and the connecting shell 316 is constructed as an inverted cone. In this way, the connecting shell 316 can play a role of undertaking and transitioning between the cup body 308 and the cup body bottom shell 302, so as to ensure the transition from the cup body 308 to the cup body bottom shell 302.

In detail, by setting the connecting part 318 on the cup body 308, and the installing part 320 that is adapted to the connecting part 318 on the connecting shell 316, and the external thread is set on the outer wall of the connecting part 318, and the inner wall of the installing part 320 is provided with the inner thread cooperating with the external thread. In this way, the cup body 308 and the connecting shell 316 are assembled together through the cooperation of the connecting part 318 and the installing part 320. In addition, the outer side wall of the connecting part 318 is gradually inclined from the top of the connecting part 318 to the bottom of the connecting part 318 toward the center line of the cup body. This structural arrangement makes the outer wall of the connecting part 318 have a guiding effect with respect to the installing part 320, which simplifies the difficulty of assembling the connecting part 318 and the installing part 320, and helps to improve the assembly efficiency.

Optionally, the structural arrangement of the decorating shell 326 can ensure a smooth transition from the cup body 308 to the cup body bottom shell, thereby ensuring the visibility and beauty of the appearance of the cup body assembly 30. At the same time, the setting of the decorating shell 326 can play a role in shielding the internal connecting devices of the cup body 308, the connecting shell 316 and the cup body bottom shell 302, thereby ensuring the visibility and beauty of the appearance of the cup body assembly 30. Of course, the decorating shell 326 can also be constructed as an inverted cone or prism.

Optionally, the base assembly 10 is also provided with a positioning protrusion 102; the positioning protrusion 102 is aligned with the positioning column 322. When cup body assembly 30 is placed on the base assembly 10, the positioning protrusion 102 is inserted into the positioning column 322. The hollow structural arrangement of the positioning column 322 makes when the positioning protrusion 102 inserted into the positioning column 322, the positioning column 322 can wrap the positioning protrusion 102. In this way, the positioning column 322 is implemented to limit the shaking of the positioning protrusion 102 in multiple directions, multiple angles and multiple dimensions, thereby enhancing the firmness of the assembly of the two. In this way, even if the vibration generated by the food processing device 1 is large, it will not separate the cup body assembly 30 from the base assembly 10.

Optionally, at least one of the outer wall of the positioning protrusion and the inner wall of the positioning column is provided with a buffer layer (not shown in the Figures), which can effectively slow down the vibration that acts on the positioning protrusion and the positioning column when the food processing device is working, thereby helping to reduce the operating noise of the product.

Optionally, the shape surrounding the outer edge of the top wall of the positioning protrusion 102 is the same as the shape surrounding the outer edge of the bottom wall of the positioning protrusion 102, and the circumference of the top wall of the positioning protrusion 102 is smaller than the circumference of the bottom wall of the positioning protrusion 102. This structural arrangement makes the positioning protrusion 102 have a guiding effect, so as to reduce the difficulty of assembling the cup body assembly 30 and the base assembly 10, and the operability is strong. Wherein, the number of the positioning protrusions 102 is multiple, the number of the positioning columns 322 is the same as the number of the positioning protrusions 102, and the multiple positioning protrusions 102 are located around the base assembly 10.

### Embodiment 13

As shown in Figs. 11 and 12, in any one of the above-mentioned embodiments, optionally, the cutter assembly 50 comprises at least one blade and a cutter shaft 502.

Wherein, at least one blade is directly or indirectly arranged on the rotary shaft 402, at least one blade is arranged on the cutter shaft 502, the cutter shaft 502 is connected with the rotary shaft 402, or the cutter shaft 502 and the rotary shaft 402 are integrated structure.

In detail, at least one blade is directly or indirectly disposed on the rotary shaft. When the cutter assembly 50 rotates, at least one blade cooperates with each other to achieve the purpose of cutting food materials in multiple directions and multiple angles at the same time. The present invention makes at least one blade to be directly set on the rotary shaft 402 through reasonable settings, that is, to achieve the purpose of the rotary shaft 402 to directly drive at least one blade to rotate. This structural arrangement avoids the investment of devices connecting the rotary shaft 402 and the blade, which is beneficial to reduce the height of the whole machine, and because of the reduction of material investment, the production cost of the product can be reduced; or when at least one blade is installed indirectly on the rotary shaft 402, in this way, when the blade is replaced, only the blade can be removed from the device connected to the rotary shaft 402 and the blade. It can reduce the amount of wear on the connection between the rotary shaft 402 and the device, which is beneficial to prolong the service life of the rotary shaft 402.

Optionally, the side wall of the rotary shaft 402 in circular direction is provided with multiple sockets (not shown in the figure), and the multiple sockets are located on the same plane, the number of blades is the same as the number of sockets, and the multiple blades are inserted into the multiple sockets. Alternatively, the side wall of the rotary shaft 402 in circular direction is provided with multiple sockets, and the multiple sockets are arranged at intervals along the axial direction of the rotary shaft 402, the number of blades is the same as the number of sockets, and the multiple blades are inserted into the multiple sockets.

In detail, by setting the cutter shaft 502, at least one blade is set on the cutter shaft 502, and the cutter shaft 502 is connected with the rotary shaft 402, that is, the indirect connection between the rotary shaft 402 and the blade is realized; the cutter shaft 502 and the rotary shaft 402 are an integrated structure, that is, the direct connection between the rotary shaft 402 and the blade is realized.

### Embodiment 14

As shown in Figs. 3, 5 to 7, in any one of the above-mentioned embodiments, Optionally, the mating surface of the stator assembly 20 and the rotor assembly 40 is a mating surface, and the mating surface is arranged opposite to a part of the outer peripheral surface of the rotor assembly 40, that is, the stator assembly 20 does not completely surround the rotor assembly 40, so that the rotor assembly 40 can be easily separated from the stator assembly 20 along its radial direction or axial direction. Specifically, since the mating surface and a part of the outer peripheral surface of the rotor assembly 40 are arranged opposite to each other, that is, the stator assembly 20 is an unclosed structure, and the rotor assembly 40 can be separated from the stator assembly 20. Compared with the closed annular stator structure in the related art, the stator assembly 20 is only arranged opposite to a part of the outer peripheral surface of the rotor assembly 40, so that the rotor assembly 40 can be separated from the stator assembly 20 in the radial direction. That is, the stator assembly 20 is an unclosed structure in the radial direction, and the missing part of the stator assembly 20 is used to accommodate a part of the cup body bottom shell 302 of the cup body assembly 30 and the rotor assembly 40, so that the structure of the food processing device 1 is more compact.

Wherein, optionally, the number of the stator assembly 20 is one, and the stator assembly 20 comprises: a stator core 202, with stator teeth 204; at least two stator windings 206, being respectively set on the stator teeth.

In this embodiment, based on the situation that the number of the stator assembly 20 is one, the stator assembly 20 comprises a stator core 202 and at least two stator windings 206. The stator core 202 has stator teeth 204, at least two stator windings 206 are set on the stator teeth 204, respectively. At least two stator windings 206 can generate a magnetic field when energized, so that the rotor assembly 40 rotates under the action of the magnetic field.

In any one of the above-mentioned embodiments, optionally, the number of the stator assemblies 20 is multiple, and multiple stator assemblies 20 are arranged in combination or scattered on the outer side of rotor assembly 40.

Specifically, the stator assembly comprises: a stator core 202 with stator teeth 204 thereon; at least one stator winding 206, provided on the stator teeth 204.

In this embodiment, based on the situation that there are multiple stator assemblies 20, each stator assembly 20 comprises a stator core 202 and at least one stator winding 206, and the stator core 202 has stator teeth 204. At least one stator winding 206 is set on the stator teeth 204, and the stator windings 206 of multiple stator assemblies 20 can jointly generate a magnetic field when energized, so that the rotor assembly 40 rotates under the action of the magnetic field.

It is understandable that when the number of stator assemblies 20 is multiple, each stator assembly 20 can comprise one stator winding 206, and multiple stator assemblies 20 have multiple stator windings 206 after being combined, and multiple stator windings 206 are energized together to generate a magnetic field, so that the rotor assembly rotates under the action of the magnetic field.

It is understandable that by providing at least two stator windings 206, the rotor assembly 40 is subjected to at least two magnetic fields during the rotation process, thereby ensuring the rotation stability of the rotor assembly 40. And compared with the stator assembly in the related art, this embodiment has fewer stator winding 206 and stator teeth 204, which saves production cost, and reduces the weight of the stator assembly 20, thus realizing a lighter product.

Optionally, in the situation of multiple stator teeth 204 on each stator core 202, multiple stator teeth 204 are distributed on the stator core 202 at intervals, so that there is a distance between two adjacent stator teeth 204, thereby forming an accommodating space for the stator windings 206, avoiding the stator windings 206 on the two adjacent stator teeth 204 from contacting each other.

In any one of the above-mentioned embodiments, optionally, ends of the stator teeth 204 close to the rotor assembly 40 are at the same distance from the rotation center of the rotor assembly 40.

In this embodiment, the distance between each stator teeth 204 and the rotation center of the rotor assembly 40 is equal. Since the stator winding 206 is set on the stator teeth 204, thereby the magnetic field generated by multiple stator windings 206 balances the magnetic force generated by the rotor assembly 40, which improves the stability of the rotor assembly 40 during the rotation.

Optionally, the number of the stator teeth 204 is two, and the stator windings 206 on the two stator teeth 204 are sequentially energized and have same polarities; or the number of the stator teeth 204 is two, the stator windings 206 on the two stator teeth 204 are energized at the same time with different polarities, and magnetic poles of the stator windings 206 on the two stator teeth 204 are alternated. When setting two stator teeth 204 in the stator assembly 20, there are two solutions for driving the rotor assembly, one of which is that the stator windings 206 on the two stator teeth 204 are energized sequentially and the two stator windings 206 generate the same polarity when they are energized. According to the principle of magnetic attraction, the magnetic force generated by the stator winding 206 acts on the rotor assembly 40 to make it rotate, and the two stator windings 206 are energized sequentially, so that the two stator windings 206 sequentially generate a force on the rotor assembly 40, thereby driving the rotor assembly 40 to continuously rotate. The other one is that the stator windings 206 on the two stator teeth 204 are energized at the same time, and the two stator windings 206 generate different polarities when they are energized. The magnetic force generated by the stator winding 206 acts on the rotor assembly 40 to make it rotate. In addition, during the process of energizing and controlling the rotation of the rotor assembly 40, the polarities of the two stator windings 206 alternately change, so that the two stator windings 206 sequentially generate magnetic forces of different polarities. That is, the two stator windings 206 sequentially exert forces on different magnetic poles on the rotor assembly 40, thereby driving the rotor assembly 40 to continuously rotate. It is understandable that when setting the stator assembly 20, the setting solutions of two stator windings 206 can be selected according to the actual situation and work requirements, which further strengthens the setting flexibility of the stator assembly 20 of the motor and improves the applicability of the motor.

Optionally, the number of the stator teeth 204 is greater than or equal to 3, and polarities of the stator windings 206 on any two adjacent stator teeth 204 are different. When the number of the stator teeth 204 is greater than or equal to 3, optionally, the two adjacent stator windings 206 are energized together, and the polarities of the two windings are reversed, so that the rotor assembly 40 is subjected to a force in a tangential direction, to realize to provide power to the rotation of the rotor assembly 40.

Optionally, as shown in Figs. 5 and 7, the insulator piece 208 comprises a first sub-insulator piece 216 and a second sub-insulator piece. The first sub-insulator piece 216 and the second sub-insulator piece are both hollow structures, so that the first sub-insulator piece 216 and the second sub-insulator piece cover the stator core 202 from the upper and lower directions, respectively. This structure arrangement facilitates the assembly of the stator core 202 and the insulator piece 208.

Optionally, the insulator piece 208 comprises a first insulating part 210, a second insulating part 212 and a third insulating part 214. The first insulating part 210 is attached to the surface of the stator core 202 to cover the surface of the stator core 202. The second insulating part 212 is connected to the first insulating part 210, and the second insulating part 212 is sleeved on the side wall of the stator teeth 204 to cover the side wall of the stator core 202. The third insulating part 214 is connected to the first insulating part 210, and the third insulating part 214 extends from the surface of the first insulating part 210 in a direction away from the stator core 202, to isolate the multiple stator cores 202 and the multiple stator windings 206. This structural arrangement can prevent at least two stator windings 206 from being electrically connected to the stator core 202, and improve the stability of the stator winding 206 during operation.

### Embodiment 15

As shown in Figs. 3, 16 to 18, in any one of the above-mentioned embodiments, optionally, the rotor assembly 40 comprises a stator installation groove, a rotary table 406, a rotary shaft 402, a magnetic piece 408, and a bearing 404.

The stator installation groove is disposed on one side of the rotor assembly 40 facing the cup body bottom shell 302, the stator installation groove is ring-shaped, a center of which coincides with a rotation center of the rotor assembly 40, and the avoidance gap 306 and the stator installation groove are aligned, so that the stator assembly 20 is placed in the stator installation groove after passing through the avoidance gap 306. The rotary table 406 is provided with an accommodating space, and the rotary shaft 402 is inserted into the center of the rotary table 406, the magnetic piece 408 is set in the accommodating space, and the magnetic piece 408 is evenly distributed along the circular direction of the rotary table 406. The bearing 404 is sleeved on a first end of the rotary shaft 402, and fixedly disposed in the rotor installing area 332 on the cup body bottom shell 302.

In detail, the rotor assembly 40 further comprises a stator installation groove, by reasonably setting the rotation center of the stator installation groove and the rotor assembly 40 and the assembly position of the avoidance gap 306, the stator installation groove is ring-shaped, and its center coincides with the rotation center of the rotor assembly 40 and set the avoidance gap 306 and the stator installation groove in alignment. In this way, the stator assembly 20 passes through the avoidance gap 306 and then is placed in the stator installation groove. That is, the structural arrangement of the stator installation groove can play a role of accommodating the stator assembly 20, and the stator installation groove defines the assembly position of the stator assembly 20 relative to the rotor assembly 40, thereby it provides reliable and effective structural support for the stator assembly 20 to drive the rotor assembly 40 to rotate.

Optionally, the avoidance gap 306 is ring-shaped to accommodate multiple stator assemblies 20, and the multiple stator assemblies 20 pass through the avoidance gap 306 and are disposed inside the rotor assembly 40.

In detail, the rotor assembly 40 comprises: a rotary table 406, a rotary shaft 402 and a magnetic piece 408. The magnetic piece 408 arranged in the accommodating space is driven by the magnetic field generated by the stator assembly 20, so that the rotor assembly 40 can rotate relative to the stator assembly 20. Wherein, the rotary shaft 402 is connected with the cutter assembly 50. Optionally, the number of the magnetic piece 408 is one, and the magnetic piece 408 is ring-shaped; or the number of the magnetic pieces 408 is multiple, and the multiple magnetic pieces 408 are distributed around the rotation center line of the rotary table 406 in circular direction of.

As shown in Figs. 19 and 20, the number of magnetic piece 408 is one, the magnetic piece 408 is ring-shaped, and a magnetic ring is used, that is, the upper plate body 410 and the lower plate body 412 together form the rotary table 406. And set the magnetic ring on the radial outer circumference of the upper plate body 410 and the lower plate body 412. Or, the number of magnetic pieces 408 is multiple, and multiple magnetic pieces 408 are distributed around the rotation center line of rotary table 406 in circular direction of.

Optionally, the number of the magnetic piece 408 is one, and the whole is ring-shaped, so that by magnetizing in its circular direction, multiple pairs of magnetic poles are formed. By distributing each pair of magnetic poles in the circular direction, it is beneficial for the magnetic piece 408 to drive the rotary table 406 to rotate smoothly under the action of the magnetic field generated by the stator winding. Of course, the number of the magnetic pieces 408 can also be multiple. At this time, it is preferable that each magnetic piece 408 has a pair of magnetic poles. By distributing multiple magnetic pieces 408 around the rotation center line of the rotary table 406 in the circular direction, the rotary table 406 can rotate smoothly.

Optionally, in the situation that the number of the magnetic piece 408 is one, by making the magnetic piece 408 have multiple pairs of magnetic poles, and each pair of magnetic poles are distributed along the axial direction of the rotary table 406, so that the rotor assembly 40 can cooperate with the stator assembly 20 located on one side of the axial direction. In the situation that each pair of magnetic poles is distributed along the radial direction of the rotary table 406, the rotor assembly 40 can be matched with the stator assembly 20 located on one side of its circular direction. A variety of distribution methods of the rotor assembly 40 and the stator assembly 20 can be realized, thereby increasing the diversity of products.

Optionally, in the situation that there are multiple magnetic pieces 408, each magnetic piece 408 can be set to have a pair of magnetic poles. Of course, each magnetic piece 408 can also be set to have multiple pairs of magnetic poles. In the situation that each magnetic piece 408 has a pair of magnetic poles, by distributing a pair of magnetic poles of each magnetic piece 408 along the axial direction of the rotary table 406, it can be matched with the stator assembly 20 located on one side of its axial direction. In the situation that a pair of magnetic poles of each magnetic piece 408 is distributed along the radial direction of the rotary table 406, the rotor assembly 40 can be matched with the stator assembly 20 located on one side of its circular direction.

Of course, each pair of magnetic poles existing in pairs on the magnetic piece 408 may not be distributed along the axial or radial direction of the rotary table 406, but distributed in other directions, such as one of each pair of magnetic poles facing the edge of the rotary table 406. It can be determined according to the specific position of the stator winding 206 matched with the rotor assembly 40.

Optionally, the ratio of the number of windings of the stator assembly 20 to the number of magnetic poles of the magnetic piece 408 is 3:4. This structural arrangement makes the generated magnetic field more stable, so that the stator assembly 20 can better match the rotor assembly 40.

Optionally, the magnetic piece 408 is a magnet and has the advantages of easy material availability and low production cost.

Optionally, the magnetic piece 408 is set inside the non-magnetically conductive rotary table 406; or multiple magnetic pieces 408 are exposed on the non-magnetically conductive rotary table 406. The assembly structure of the magnetic piece 408 and the non-magnetically conductive rotary table 406 can be set according to the actual situation, so that the magnetic piece 408 is set inside the non-magnetically conductive rotary table 406, or the magnetic piece 408 is exposed on the non-magnetically conductive rotary table 406, so that the occupancy rate of the internal space of the food processing device 1 by the rotor assembly 40 can be adjusted in a targeted manner.

Optionally, the distance between the magnetic piece 408 and the outer edge of the rotary table 406 is not more than 4mm, which in turn defines the assembly structure of the magnetic piece 408 relative to the stator assembly 20, therefore, effective and feasible structural support is provided for the stator assembly 20 to drive the rotor assembly 40 to rotate in the subsequent. If the distance between the magnetic piece 408 and the outer edge of the rotary table 406 is greater than 4mm, the magnetic piece 408 is farther away from the stator assembly 20, which will reduce the drive effect of the stator assembly 20 on the rotor assembly 40.

Optionally, the setting position of the magnetic piece 408 relative to the rotary table 406 can be set according to the magnetic field generated by the stator assembly 20, for example, the poles of the magnetic piece 408 are distributed along the radial direction of the rotary table 406, and another example is that the poles of the magnetic piece 408 are distributed along the circular direction of the rotary table 406.

Optionally, the rotary table 406 is a plastic rotary table 406 or a non-magnetically conductive light metal rotary table 406, so the rotary table 406 has a lighter weight, which in turn makes the weight of the motor lighter, which facilitates the transportation and movement of the motor, and improves the convenience of the motor installation process.

In detail, the rotor assembly 40 also comprises a bearing 404; the bearing 404 can play a role in limiting the assembly size of the rotary shaft 402 relative to the cup body bottom shell 302. That is, the structural arrangement limits the positional relationship of the rotary shaft 402 with respect to the cup body bottom shell 302, thereby providing stable structural support for the safety and reliability of the rotation of the rotor assembly 40.

Optionally, the food processing device is at least one of the blender, wall breaker, soymilk machine, and cooking machine.

### Embodiment 16

The food processing device 1 according to the embodiment comprises a cup body assembly 30, a rotor assembly 40 and a stator assembly 20.

Wherein, the cup body assembly 30 is provided with an assembly port 116, the rotor assembly 40 is provided in the cup body assembly 30, and the stator assembly 20 is inserted into the assembly port 116 to drive the rotor assembly 40 to rotate. Wherein the stator assembly 20 is fixedly arranged in the assembly port 116 (the above-mentioned embodiment is not shown in the figures, but those skilled in the art can understand based on the existing drawings). In this embodiment, the stator assembly 20 is fixedly arranged in the assembly port 116.

Wherein, the rotor assembly 40 can be separated from the stator assembly 20, that is, there is no need to install the overall motor in the base, and only the stator assembly 20 of the motor is set in the base, so that the height of the base is reduced, and the height of the food processing device 1 is reduced. In addition, compared to the stator assembly 20 in the related technology, the stator assembly 20 is set to an unclosed structure, which makes the weight of the stator assembly 20 lighter, thereby achieving a lighter weight of the overall product, which is convenient for users to extract and use, and takes up less space. It is also convenient for storage of the food processing device 1.

### Embodiment 17

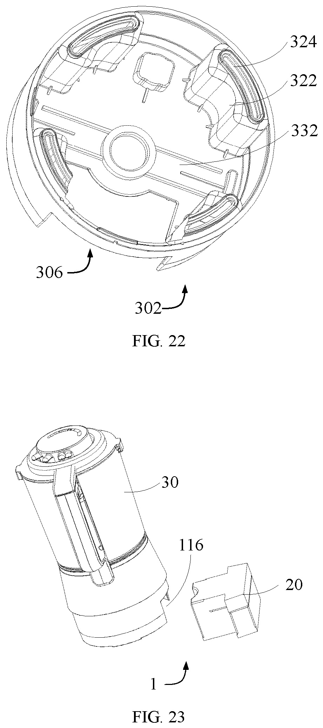

As shown in Figs. 23 to 25, the food processing device 1 according to the embodiment comprises: a cup body assembly 30, a rotor assembly 40 and a stator assembly 20.

Wherein, the cup body assembly 30 is provided with an assembly port 116, the rotor assembly 40 is provided in the cup body assembly 30, and the stator assembly 20 is configured to be suitable for being detachably inserted into the assembly port 116 to drive the rotor assembly 40 to rotate.

In detail, by reasonably setting the composition structure of the food processing device 1, the rotor assembly 40 is arranged in the cup body assembly 30, and the stator assembly 20 is detachably inserted into the assembly port 116, that is, the rotor assembly 40 is used as a component of the cup body assembly 30, the stator assembly 20 is used as an independent module. This structure realizes the split assembly structural arrangement of the stator assembly 20 and the rotor assembly 40, and changes the composition structure of the motor in the related technology. For example, the motor is assembled into the base as a whole power part, which makes it difficult to disassemble the stator and the rotor. Therefore, the cooperation of the stator assembly 20 and the rotor assembly 40 has the advantages of simple structure and low production cost. In addition, because the stator assembly 20 and the rotor assembly 40 are arranged separately, the assembly structure of the stator assembly 20 and the rotor assembly 40 simplifies the follow-up repair and maintenance of the stator assembly 20 and the disassembly process of the rotor assembly 40, thereby reducing the difficulty of disassembly and improving the efficiency of maintenance.

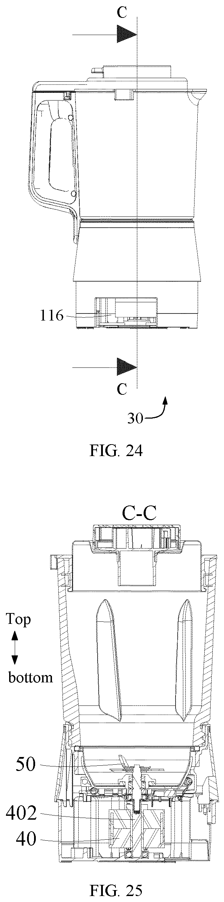

As shown in Figs. 24 and 25, the food processing device 1 according to the embodiment comprises: a cup body assembly 30, a rotor assembly 40, a stator assembly 20 and a cutter assembly 50.

Wherein, the cutter assembly 50 is arranged in the cup body assembly 30, the cutter assembly 50 is connected to the rotary shaft 402 of the rotor assembly 40, and the rotor assembly 40 can drive the cutter assembly 50 to rotate.

In detail, in the related art, the motor is set on the base as a whole, and the motor drives the active disk on the base to rotate and then drives the driven disk in the cup body to rotate, so as to finally realize the purpose of using the driven disk to drive the cutter to rotate; or the motor is connected to the cutter in the cup body through a coupling, which drives the cutter to rotate. That is, the motor is indirectly connected to the cutter through a coupling or two disks. This structural arrangement makes the rotary shaft of the motor and the cutter shaft of the cutter have a problem of inconsistency, so vibration and noise will be generated when the product is used. The stator assembly 20 and the rotor assembly 40 are arranged separately. The rotor assembly 40 is a subcomponent of the cup body assembly 30, so it is directly connected to the cutter assembly 50 located in the cup body assembly 30 through the rotary shaft 402 of the rotor assembly 40. Furthermore, the rotor assembly 40 is used to directly drive the cutter assembly 50 to rotate, of course, the direct connection solution between the cutter assembly 50 and the rotary shaft 402 is more effective, but it does not rule out that the cutter assembly 50 is connected to the rotary shaft 402 through other devices. Compared with the assembly structure in the related technology, the rotor assembly 40 directly drives the cutter assembly 50 to rotate, eliminating the two disks or coupling, so the height of the whole machine can be reduced, and it also overcomes the poor experience in the related technology that is not easy to take out between the base and the cup body assembly 30 caused by the magnetic attraction between the two disks.

Optionally, the stator assembly 20 is inserted into the cup body assembly 30, and the stator assembly 20 is located on one side of the rotor assembly 40; the assembly port 116 is located on the bottom wall and/or side wall of the cup body assembly 30.

In detail, the assembly port 116 is located at the bottom of the cup body assembly 30 (not shown in the figures), so as to ensure the space above the food processing device for accommodating food materials, thereby helping to reduce the height of whole machine of the food processing device.

In detail, when the assembly port 116 is located on the bottom wall of the cup body assembly 30, the stator assembly 20 is inserted into the cup body assembly 30, the stator assembly 20 is located outside the rotor assembly 40 or the stator assembly 20 is located at one end of the rotor assembly 40 facing the bottom wall of the cup body assembly 30 (not shown in the figures).

In detail, when the assembly port 116 is located on the bottom wall of cup body assembly 30, the rotor assembly 40 is provided with a stator installation groove, the stator installation groove is ring-shaped, and its center coincides with the rotation center of the rotor assembly 40. After the stator assembly 20 is inserted into the cup body assembly 30, the stator assembly 20 is located in the stator installation groove (not shown in the figures).

In detail, when at least a part of the assembly port 116 is formed on the side wall of the cup body assembly 30, the stator assembly 20 is inserted into the cup body assembly 30, and the stator assembly 20 is located outside the rotor assembly 40.

Wherein, the assembly port 116 is located on the bottom wall of the cup body assembly 30, and the position setting of the assembly port 116 realizes the use of the structure of the cup body assembly 30 to shield the assembly port 116, avoiding the exposure of the assembly port 116. In this way, the aesthetics and smoothness of the product appearance can be ensured; the assembly port 116 is located on the side wall of the cup body assembly 30 in circular direction. This structure is arranged to facilitate the insertion of the stator assembly 20 and the cup body assembly 30, which reduces the difficulty of assembly and disassembly of the two and it is very convenient for users to operate. A part of the assembly port 116 is formed on the bottom wall of the cup body assembly 30, and the other part is formed on the side wall of the cup body assembly 30 in circular direction. The matching area of the stator assembly 20 and the rotor assembly 40 can be limited to the bottom of the cup body assembly 30. In this way, on the basis of ensuring the space for the food processing device to contain the ingredients, it is beneficial to reduce the whole height of the food processing device.

Optionally, the stator assembly 20 has a mating surface 218 matched with the rotor assembly 40. When the stator assembly 20 is installed in the cup body assembly 30, the mating surface 218 is arranged opposite to a part of the outer peripheral surface of the rotor assembly 40, and the stator assembly 20 can be separated from the rotor assembly 40 in the radial direction, so that the stator assembly 20 can be suitable for being detachably inserted into the side wall of the cup body assembly 30. In other words, the stator assembly 20 is an unclosed structure, and the structure is arranged to facilitate the assembly and separation of the rotor assembly 40 and the stator assembly 20, and realize the radial separation of the stator assembly 20 and the rotor assembly 40. Specifically, the surface of the stator assembly 20 corresponding to the end surface of the stator teeth 204 constitutes the mating surface 218 of the stator assembly 20.

In detail, the stator assembly 20 can be inserted into the rotor assembly 40 from the bottom of the cup body assembly 30. At this time, although the stator assembly 20 cannot be separated from the rotor assembly 40 in the radial direction, the stator assembly 20 can be separated from the rotor assembly 40 in the axial direction; similarly, the technical effect of being easily separated from the rotor assembly 40 can also be achieved. In addition, the stator assembly 20 can also be inserted at the end of the rotor assembly 40 in the axial direction, similarly, the technical effect of driving the rotor assembly 40 to rotate and being easy to disassemble can be achieved (not shown in the figures).

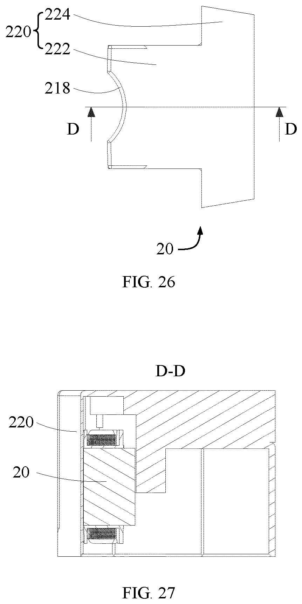

In detail, as shown in Fig. 26, when the stator assembly 20 is inserted into the cup body assembly 30, the stator assembly 20 has a mating surface 218 matched with the rotor assembly 40. The mating surface 218 is arranged opposite to a part of the outer peripheral surface of the rotor assembly 40, and the stator assembly 20 can be separated from the rotor assembly 40 in the radial direction, so that the stator assembly 20 can be suitable for being detachably inserted into the side wall of the cup body assembly 30. The stator assembly 20 can also be constructed as a closed structure. Here, examples are not listed one by one.

In detail, as shown in Fig. 26, when the stator assembly 20 is located outside the rotor assembly 40 or the stator assembly 20 is located at one end of the rotor assembly 40 facing the bottom wall of the cup body assembly 30, the stator assembly 20 has a mating surface 218 matched with the rotor assembly 40. The mating surface 218 can be arranged opposite to a part of the outer peripheral surface of the rotor assembly 40, and the stator assembly 20 can be separated from the rotor assembly 40 in the radial direction, so that the stator assembly 20 can be suitable for being detachably inserted into the side wall of the cup body assembly 30.

### Embodiment 18

As shown in Figs. 5 to 7 and 26, 27, in any one of the above-mentioned embodiments, optionally, the stator assembly 20 comprises a shell 220, a control device (not shown in the figures), and a stator assembly 20 and a power supply device.

Wherein, the control device is connected to the stator assembly 20, and is used to control the on-off of current of the stator assembly 20, and the shell 220 is used to accommodate the stator assembly 20 and the control device.

In detail, the shell 220 comprises a main body 222 and a stopper 224. The main body 222 is configured with a receiving cavity to be suitable for accommodating the stator assembly 20, the stopper 224 is connected to the main body 222, and when the stator assembly 20 is inserted into the assembly port 116, the stopper 224 abuts against the outer wall of the cup body assembly 30. The stopper 224 defines the insertion depth of the stator assembly 20 relative to the cup body assembly 30, that is, defines the assembly position of the stator assembly 20 relative to the cup body assembly 30. In addition, the control device is connected to the stator assembly 20, to control the on-off of current of the stator assembly 20, thereby providing energy power for the work of the stator assembly 20. This structural arrangement provides a reliable energy supply for the stator assembly 20 to drive the rotor assembly 40 to rotate, and provides structural support for the independent arrangement of the stator assembly 20.

In detail, the stator assembly 20 is configured as a structure having an opening in the radial direction, and the opening penetrates along the axial direction of the stator assembly 20. Since the stator assembly 20 is configured as a structure with an opening, it can be inserted into and taken out from the cup body assembly 30. The stator assembly 20 comprises: a stator core 202, which has stator teeth 204; at least two stator windings 206 are respectively set on the stator teeth 204. The stator assembly 20 comprises a stator core 202, the stator core 202 has stator teeth 204, and each stator teeth 204 is provided with a stator winding 206. The stator winding 206 can generate a magnetic field when energized, and the rotor assembly 40 rotates under the action of the magnetic field; wherein the stator winding 206 is used to generate a magnetic field when connected to the power supply. Of course, the stator assembly 20 can also be a closed structure. Here, examples are not listed one by one.

Specifically, when the stator assembly 20 is one, at least two stator teeth 204 are provided on the stator core 202 of one stator assembly 20, so that the stator winding 206 is respectively provided on the two stator teeth 204; when the number of stator assemblies 20 is at least two, each stator core 202 is provided with only one stator teeth 204, to ensure the number of stator winding 206. In other words, as long as the number of stator winding 206 is guaranteed.

In detail, the end faces of at least two stator teeth 204 close to the rotor assembly 40 are at the same distance from the rotation center of the rotor assembly 40. The distance between each stator teeth 204 and the axis of the rotor assembly 40 is equal, which further ensures that the magnetic field generated by each stator winding 206 has the same magnetic force on the rotor assembly 40.

Optionally, the number of the stator teeth 204 is two, and stator windings 206 on the two stator teeth 204 are sequentially energized and have same polarities; or the number of the stator teeth 204 is two, stator windings 206 on the two stator teeth 204 are energized at the same time with different polarities, and magnetic poles of the stator windings 206 on the two stator teeth 204 are alternated. When setting two stator teeth 204 in the stator assembly 20, there are two solutions for driving the rotor assembly 40, one of which is that the stator windings 206 on the two stator teeth 204 are energized sequentially and the two stator windings 206 generate the same polarity when they are energized. According to the principle of magnetic attraction, the magnetic force generated by the stator winding 206 acts on the rotor assembly 40 to make it rotate, and the two stator windings 206 are energized sequentially, so that the two stator windings 206 sequentially generate a force on the rotor assembly 40, thereby driving the rotor assembly 40 to continuously rotate. The other one is that the stator windings 206 on the two stator teeth 204 are energized at the same time, and the two stator windings 206 generate different polarities when they are energized. The magnetic force generated by the stator winding 206 acts on the rotor assembly 40 to make it rotate. In addition, during the process of energizing and controlling the rotation of the rotor assembly 40, the polarities of the two stator windings 206 alternately change, so that the two stator windings 206 sequentially generate magnetic forces of different polarities. That is, the two stator windings 206 sequentially exert forces on different magnetic poles on the rotor assembly 40, thereby driving the rotor assembly 40 to continuously rotate. It is understandable that when setting the stator assembly 20, the setting solutions of two stator windings 206 can be selected according to the actual situation and work requirements, which further strengthens the setting flexibility of the stator assembly 20 of the motor and improves the applicability of the motor.

Optionally, the number of the stator teeth 204 is greater than or equal to 3, and polarities of the stator windings 206 on any two adjacent stator teeth 204 are different. When the number of stator teeth 204 is greater than or equal to 3, optionally, the two adjacent stator windings 206 are energized together, and the polarities of the two windings are reversed, so that the rotor assembly 40 is subjected to a force in a tangential direction, and realizing to provide power to the rotation of the rotor assembly 40.

In detail, setting the insulator piece 208 on the stator core 202, the insulator piece 208 has the function of insulation, the insulator piece 208 can isolate the stator core 202 and at least two stator windings 206, and the insulator piece 208 can avoid the electrical connection between at least two stator windings 206 and the stator core 202, improving the stability of the stator winding 206 during operation.

Optionally, the insulator piece 208 comprises a first sub-insulator piece 216 and a second sub-insulator piece, the first sub-insulator piece 216 and the second sub-insulator piece are hollow structures. In this way, the first sub-insulator piece 216 and the second sub-insulator piece are made to cover the stator core 202 from the upper and lower directions, respectively. This structure arrangement facilitates the assembly of the stator core 202 and the insulator piece 208.

Optionally, the insulator piece 208 comprises a first insulating part 210, a second insulating part 212 and a third insulating part 214. The first insulating part 210 is attached to the surface of the stator core 202 to cover the surface of the stator core 202. The second insulating part 212 is connected to the first insulating part 210, and the second insulating part 212 is sleeved on the side wall of the stator teeth 204 to cover the side wall of the stator core 202. The third insulating part 214 is connected to the first insulating part 210, and the third insulating part 214 extends from the surface of the first insulating part 210 in a direction away from the stator core 202 to cover multiple stator windings 206. This structural arrangement can prevent at least two stator windings 206 from being electrically connected to the stator core 202, and improve the stability of the stator winding 206 during operation.

In detail, the power supply device is connected to at least two stator windings 206. Since the power supply device is used for external power source and provides electrical energy for at least two stator windings 206, it provides a reliable energy supply for the stator assembly 20 to drive the rotor assembly 40 to rotate, and a structural support is provided for the independent arrangement of the stator assembly 20.

In detail, by limiting the assembly structure of the stator assembly 20 and the cup body assembly 30, the stator assembly 20 passes through the assembly port 116, and the stator assembly 20 and the assembly port 116 are in sliding fit and move relative to the cup body assembly 30. The stator assembly 20 has an assembly position relative to the movement of the cup body assembly 30, and the stator assembly 20 can cover the assembly port 116 when in the assembly position. This avoids the exposure of assembly port 116, and improves the smoothness and aesthetics of the appearance of the whole machine. At the same time, the arrangement of the assembly position limits the depth at which the stator assembly 20 is inserted into the cup body assembly 30, that is, defines the assembly position of the stator assembly 20 and the cup body assembly 30.

In detail, the stator assembly 20 further comprises: the first clamping part, disposed on the shell 220 of the stator assembly 20, a second clamping part adapted to the first clamping part is formed in the cup body assembly 30; wherein the first clamping part is engaged with the second clamping part, to fix the stator assembly 20 at the assembly position.

Optionally, one of the first clamping part and the second clamping part is a buckle, and another one is a card slot (not shown in the figures). In this way, when the stator assembly 20 is inserted into the cup body assembly 30 to a preset depth, the buckle engages with the card slot to fix the stator assembly 20 in the assembly position. This structural arrangement limits the depth of insertion of the stator assembly 20 into the cup body assembly 30, which can ensure that the stator assemblies 20 accurately move to the assembly position, thereby achieving the purpose of covering the assembly port with the stator assembly 20 at the assembly position. This structural arrangement ensures the assembly size of the stator assembly 20 relative to the cup body assembly 30, effectively ensuring the accuracy of product assembly.

In detail, the food processing device is at least one of the blender, wall breaker, soymilk machine, cooking machine, chef machine and cookers.

### Embodiment 19

As shown in Figs. 16 to 18, in any one of the above-mentioned embodiments, optionally, the rotor assembly 40 comprises a rotary table 406, a rotary shaft 402, a magnetic piece 408, and a bearing 404.

Wherein, the rotary table 406 is disc-shaped, the rotary table 406 is provided with an accommodating space, and the rotary shaft 402 is inserted into the center of the rotary table 406, the magnetic piece 408 is set in the accommodating space, and the magnetic piece 408 is evenly distributed along the circular direction of the rotary table 406.

In detail, In detail, the rotor assembly 40 comprises a rotary table 406, a rotary shaft 402, and multiple magnetic pieces 408, wherein the rotary table 406 is a non-magnetically conductive rotary table by default, which eliminates the rotor core structure made of silicon steel sheets in the related technology, which not only helps reduce the weight of the motor, but also eliminates that in the related technology, the need for the magnetic field on the rotor core laminated in the axial direction, to pass through the teeth and the yoke of the stator and the rotor to form a magnetic field loop, so the closed magnetic field lines must be curved, and there will be greater leakage and loss. Furthermore, the magnetic piece 408 is arranged in the accommodating space 406 of the rotary table, which can reduce the space occupancy rate and improve the installation firmness of the magnetic piece 408.

Optionally, the number of at least two stator windings 206 of the stator assembly 20 is 3N, and magnetic poles of the magnetic piece 408 is 4M, wherein N is a positive integer and M is a positive integer. The number of the stator windings 206 is limited, that is, the number of the stator windings 206 is an integer multiple of 3, and the magnetic poles of the magnetic pieces 408 in the rotor assembly 40 is an integer multiple of 4. This arrangement makes the generated magnetic field more stable, so that the stator assembly 20 can better cooperate with the rotor assembly 40, thereby the output efficiency of the motor is higher.

Optionally, the magnetic piece 408 is a magnet. the magnetic piece 408 in the rotor assembly 40 is a magnet. The magnet has the advantages of easy material availability and low production cost, and it ensures that the rotor assembly 40 can continue to rotate under the influence of the magnetic force in the magnetic field generated by the stator assembly 20.

Specifically, the magnetic piece can be set as a ring-shaped overall structure; it can also be set as multiple separate magnetic pieces, and multiple separate magnetic pieces are enclosed to form a ring shape.

When the magnetic piece 408 can be set as a ring-shaped overall structure, as shown in Figs.19 and 20, the rotary table 406 is composed of the upper plate body 410 and the lower plate body 412. The magnetic piece 408 uses a magnetic ring, which is sleeved on the upper plate body 410 and the lower plate body 412. When the magnetic piece 408 can be set in multiple split structures, as shown in Fig. 18, the multiple magnetic pieces 408 are distributed in a circle on the rotary table 406.

In detail, the bearing 404 is sleeved on the first end of the rotary shaft 402, and the bearing 404 is fixed on the inner wall of the cup body assembly 30. The bearing 404 can limit the assembly size of the rotary shaft 402 relative to the cup body assembly 30. That is, the structural arrangement limits the positional relationship of the rotary shaft 402 with respect to cup body assembly 30, thereby providing stable structural support for the safety and reliability of the rotation of the rotor assembly 40.

Further, in any one of the above-mentioned embodiments, the stator assembly 20 is provided to package the stator assembly 20 to prevent the stator assembly 20 from being exposed to the outside, thereby protecting the stator assembly 20.

In the description, the term "plurality" refers to two or more than two, unless clearly defined otherwise. The terms "mounted", "connected", "connection", "fixed", and the like are to be construed broadly, for example, the term "connected" may refer to a fixed connection, a flexible connection, or an integral connection; the term "connection" may refer to a direct connection or an indirect connection through an intermediary. The specific meaning of the above terms in the present invention will be understood by those of ordinary skill in the art, as the case may be. In the description herein, the terms "an embodiment", "some embodiments", "specific embodiments" and the like indicate that a particular feature, structure, material, or characteristic described in connection with the embodiment or example is comprised in at least one embodiment or example of the invention. Herein, schematic representations of the above terms do not necessarily refer to the same embodiment or example. Furthermore, the particular features, structures, materials, or characteristics described may be combined in any suitable manner in any one or more embodiments or examples.

The descriptions above are only preferred embodiments, which are not used to limit the present invention.

## Claims

1. A food processing device (1), comprising a base assembly (10) and a cup body assembly (30), wherein the base assembly (10) comprises: a base body; two stator assemblies (20) comprising a first stator assembly (20a) and a second stator assembly (20b), arranged on the base body, and comprising stator teeth (204); and a rotor avoidance area (104), being configured to be suitable for placing a rotor assembly (40) of the food processing device (1) on the base body; wherein the two stator assemblies (20) are disposed around the rotor avoidance area (104), and surfaces of the stator teeth (204) of the two stator assemblies (20) are located on one side of the rotor avoidance area (104);
wherein the cup body assembly (30) is provided with the rotor assembly (40), wherein the rotor assembly (40) is configured to be suitable for being driven by the two stator assemblies (20), and the cup body assembly (30) is configured to be suitable for being detachably disposed on the base assembly;
wherein the first stator assembly (20a) and the second stator assembly (20b) are configured to work simultaneously or independently, in accordance with the working mode of the food processing device (1).

2. The food processing device (1) according to claim 1, wherein the rotor assembly (40) of the food processing device (1) can be detachably placed on the base body.

3. The food processing device (1) according to claim 2, comprising: a cup placement area (108), being configured to be suitable for the cup body assembly (30) of the food processing device (1) to be detachably placed on the base body; and at least one positioning protrusion (102), disposed in the cup placement area (108).

4. The food processing device (1) according to claim 3, wherein the rotor avoidance area (104) is located in the cup placement area (108), and the at least one positioning protrusion (102) is disposed around the rotor avoidance area (104).

5. The food processing device (1) according to claim 1, wherein each of the stator assemblies (20) comprises: a stator core (202), having the stator teeth (204) thereon; and at least one stator winding (206), disposed on the stator teeth (204).

6. The food processing device (1) according to claim 5, wherein ends of the stator teeth (204) close to the rotor assembly (40) are at same distance from a rotation center of the rotor assembly (40).

7. The food processing device (1) according to claim 5, wherein the number of the stator teeth (204) is two, and stator windings (206) on the two stator teeth (204) are sequentially energized and have same polarities; or the number of the stator teeth (204) is two, stator windings (206) on the two stator teeth (204) are energized at the same time with different polarities, and magnetic poles of the stator windings (206) on the two stator teeth (204) are alternated.

8. The food processing device (1) according to claim 1, wherein the stator assembly (20) further comprises: a magnetism judging device, disposed along a circular direction of the rotor assembly (40), and used to obtain a rotation direction of the rotor assembly (40) relative to the stator assembly (20).

9. The food processing device (1) according to claim 5 , wherein the number of the stator teeth (204) is greater than or equal to 3, and polarities of the stator windings (206) on any two adjacent stator teeth (204) are different.

10. The food processing device (1) according to claim 5, wherein the stator assembly (20) further comprises: an insulator piece (208), disposed on the stator core (202), and used to isolate the stator core (202) and the stator winding (206).

11. The food processing device (1) according to any one of claims 1 to 10, wherein the cup body assembly (30) further comprises: a cutter assembly (50), disposed in the cup body assembly (30), wherein the cutter assembly (50) is connected to a rotary shaft of the rotor assembly (40), and the rotor assembly (40) drives the cutter assembly (50) to rotate.

12. The food processing device (1) according to claim 11, wherein the rotor assembly (40) comprises: a rotary table (406), being disc-shaped, and being provided with an accommodating space; the rotary shaft (402), inserted into a center of the rotary table (406); and a magnetic piece (408), disposed in the accommodating space, and distributed along a circular direction of the rotary table (406).

## Patentansprüche

1. Lebensmittel-Verarbeitungsvorrichtung (1), umfassend eine Basisanordnung (10) und eine Becherkörperanordnung (30), wobei die Basisanordnung (10) Folgendes umfasst: einen Basishauptteil, zwei Statoranordnungen (20), die eine erste Statoranordnung (20a) und eine zweite Statoranordnung (20b) umfassen, die an dem Basishauptteil angeordnet sind und Statorzähne (204) und einen Rotorumgehungsbereich (104) umfassen, dafür konfiguriert, zum Platzieren einer Rotoranordnung (40) der Lebensmittel-Verarbeitungsvorrichtung (1) an dem Basishauptteil geeignet zu sein, wobei die zwei Statoranordnungen (20) rings um den Rotorumgehungsbereich (104) angeordnet sind und sich Oberflächen der Statorzähne (204) der zwei Statoranordnungen (20) an einer Seite des Rotorumgehungsbereichs (104) befinden,
wobei die Becherkörperanordnung (30) mit der Rotoranordnung (40) versehen ist, wobei die Rotoranordnung (40) dafür konfiguriert ist, zum Angetriebenwerden durch die zwei Statoranordnungen (20) geeignet zu sein, und die Becherkörperanordnung (30) dafür konfiguriert ist, zum lösbaren Anordnen an der Basisanordnung geeignet zu sein,
wobei die erste Statoranordnung (20a) und die zweite Statoranordnung (20b) dafür konfiguriert sind, gemäß dem Arbeitsmodus der Lebensmittel-Verarbeitungsvorrichtung (1) gleichzeitig oder unabhängig zu arbeiten.

2. Lebensmittel-Verarbeitungsvorrichtung (1) nach Anspruch 1, wobei die Rotoranordnung (40) der Lebensmittel-Verarbeitungsvorrichtung (1) lösbar an dem Basishauptteil platziert werden kann.

3. Lebensmittel-Verarbeitungsvorrichtung (1) nach Anspruch 2, umfassend:
einen Becherplatzierungsbereich (108), der dafür konfiguriert ist, zum lösbaren Platzieren der Becherkörperanordnung (30) der Lebensmittel-Verarbeitungsvorrichtung (1) an dem Basishauptteil geeignet zu sein, und mindestens einen Positionierungsvorsprung (102), der in dem Becherplatzierungsbereich (108) angeordnet ist.

4. Lebensmittel-Verarbeitungsvorrichtung (1) nach Anspruch 3, wobei sich der Rotorumgehungsbereich (104) in dem Becherplatzierungsbereich (108) befindet und der mindestens eine Positionierungsvorsprung (102) rings um den Rotorumgehungsbereich (104) angeordnet ist.

5. Lebensmittel-Verarbeitungsvorrichtung (1) nach Anspruch 1, wobei jede der Statoranordnungen (20) Folgendes umfasst: einen Statorkern (202), der daran die Statorzähne (204) aufweist, und mindestens eine Statorwicklung (206), die an den Statorzähnen (204) angeordnet ist.

6. Lebensmittel-Verarbeitungsvorrichtung (1) nach Anspruch 5, wobei Enden der Statorzähne (204) nahe der Rotoranordnung (40) im gleichen Abstand zu einem Rotationszentrum der Rotoranordnung (40) liegen.

7. Lebensmittel-Verarbeitungsvorrichtung (1) nach Anspruch 5, wobei die Anzahl der Statorzähne (204) zwei beträgt und die Statorwicklungen (206) an den zwei Statorzähnen (204) nacheinander erregt werden und die gleiche Polarisation aufweisen, oder die Anzahl der Statorzähne (204) zwei beträgt, Statorwicklungen (206) an den zwei Statorzähnen (204) zur gleichen Zeit mit unterschiedlichen Polaritäten erregt werden und Magnetpole der Statorwicklungen (206) an den zwei Statorzähnen (204) wechseln.

8. Lebensmittel-Verarbeitungsvorrichtung (1) nach Anspruch 1, wobei die Statoranordnung (20) ferner Folgendes umfasst: eine Magnetismusbewertungsvorrichtung, die entlang einer Kreisrichtung der Rotoranordnung (40) angeordnet ist und verwendet wird, um eine Rotationsrichtung der Rotoranordnung (40) relativ zu der Statoranordnung (20) zu erzielen.

9. Lebensmittel-Verarbeitungsvorrichtung (1) nach Anspruch 5, wobei die Anzahl der Statorzähne (204) größer oder gleich 3 ist und Polaritäten der Statorwicklungen (206) an jeweils zwei benachbarten Statorzähnen (204) unterschiedlich sind.

10. Lebensmittel-Verarbeitungsvorrichtung (1) nach Anspruch 5, wobei die Statoranordnung (20) ferner Folgendes umfasst: ein Isolatorstück (208), das an dem Statorkern (202) angeordnet ist und verwendet wird, um den Statorkern (202) und die Statorwicklung (206) zu isolieren.

11. Lebensmittel-Verarbeitungsvorrichtung (1) nach einem der Ansprüche 1 bis 10, wobei die Becherkörperanordnung (30) ferner Folgendes umfasst: eine Messeranordnung (50), die in der Becherkörperanordnung (30) angeordnet ist, wobei die Messeranordnung (50) mit einer Drehwelle der Rotoranordnung (40) verbunden ist und die Rotoranordnung (40) die Messeranordnung (50) zur Drehung antreibt.

12. Lebensmittel-Verarbeitungsvorrichtung (1) nach Anspruch 11, wobei die Rotoranordnung (40) Folgendes umfasst: einen Drehtisch (406), der scheibenförmig ist und mit einem Unterbringungsraum versehen ist, die Drehwelle (402), eingesetzt in ein Zentrum des Drehtischs (406), und ein Magnetstück (408), das in dem Unterbringungsraum angeordnet und entlang einer Kreisrichtung des Drehtischs (406) verteilt ist.

## Revendications

1. Dispositif de traitement d'aliments (1), comprenant un ensemble de base (10) et un ensemble corps de cuve (30), dans lequel l'ensemble de base (10) comprend : un corps de base ; deux ensembles stator (20) comprenant un premier ensemble stator (20a) et un second ensemble stator (20b), agencés sur le corps de base, et comprenant des dents de stator (204) ; et une zone d'évitement de rotor (104), qui est configurée pour être appropriée pour placer un ensemble rotor (40) du dispositif de traitement d'aliments (1) sur le corps de base ; dans lequel les deux ensembles stator (20) sont disposés autour de la zone d'évitement de rotor (104), et des surfaces des dents de stator (204) des deux ensembles stator (20) sont situées sur un côté de la zone d'évitement de rotor (104) ;
dans lequel l'ensemble corps de cuve (30) est doté de l'ensemble rotor (40), dans lequel l'ensemble rotor (40) est configuré pour être approprié pour être entraîné par les deux ensembles stator (20), et l'ensemble corps de cuve (30) est configuré pour être approprié pour être disposé de manière amovible sur l'ensemble de base ;
dans lequel le premier ensemble stator (20a) et le second ensemble stator (20b) sont configurés pour travailler simultanément ou indépendamment, conformément au mode de travail du dispositif de traitement d'aliments (1).

2. Dispositif de traitement d'aliments (1) selon la revendication 1, dans lequel l'ensemble rotor (40) du dispositif de traitement d'aliments (1) peut être placé de manière amovible sur le corps de base.

3. Dispositif de traitement d'aliments (1) selon la revendication 2, comprenant : une zone de placement de cuve (108), qui est configurée pour être appropriée pour que l'ensemble corps de cuve (30) du dispositif de traitement d'aliments (1) soit placé de manière amovible sur le corps de base ; et au moins une saillie de positionnement (102), disposée dans la zone de placement de cuve (108).

4. Dispositif de traitement d'aliments (1) selon la revendication 3, dans lequel la zone d'évitement de rotor (104) est située dans la zone de placement de cuve (108), et l'au moins une saillie de positionnement (102) est disposée autour de la zone d'évitement de rotor (104).

5. Dispositif de traitement d'aliments (1) selon la revendication 1, dans lequel chacun des ensembles stator (20) comprend : un noyau de stator (202), présentant les dents de stator (204) sur celui-ci ; et au moins un enroulement de stator (206), disposé sur les dents de stator (204).

6. Dispositif de traitement d'aliments (1) selon la revendication 5, dans lequel des extrémités des dents de stator (204) proches de l'ensemble rotor (40) sont à une même distance d'un centre de rotation de l'ensemble rotor (40).

7. Dispositif de traitement d'aliments (1) selon la revendication 5, dans lequel le nombre de dents de stator (204) est de deux, et des enroulements de stator (206) sur les deux dents de stator (204) sont séquentiellement alimentés et présentent les mêmes polarités ; ou le nombre de dents de stator (204) est de deux, les enroulements de stator (206) sur les deux dents de stator (204) sont alimentés en même temps avec des polarités différentes, et des pôles magnétiques des enroulements de stator (206) sur les deux dents de stator (204) sont alternés.

8. Dispositif de traitement d'aliments (1) selon la revendication 1, dans lequel l'ensemble stator (20) comprend en outre : un dispositif de détermination de magnétisme, disposé le long d'une direction circulaire de l'ensemble rotor (40), et utilisé pour obtenir une direction de rotation de l'ensemble rotor (40) par rapport à l'ensemble stator (20).

9. Dispositif de traitement d'aliments (1) selon la revendication 5, dans lequel le nombre de dents de stator (204) est supérieur ou égal à 3, et des polarités des enroulements de stator (206) sur deux quelconques dents de stator (204) adjacentes sont différentes.

10. Dispositif de traitement d'aliments (1) selon la revendication 5, dans lequel l'ensemble stator (20) comprend en outre : une pièce isolante (208), disposée sur le noyau de stator (202), et utilisée pour isoler le noyau de stator (202) et l'enroulement de stator (206).

11. Dispositif de traitement d'aliments (1) selon l'une quelconque des revendications 1 à 10, dans lequel l'ensemble corps de cuve (30) comprend en outre : un ensemble dispositif de coupe (50), disposé dans l'ensemble corps de cuve (30), dans lequel l'ensemble dispositif de coupe (50) est relié à un arbre tournant de l'ensemble rotor (40), et l'ensemble rotor (40) entraîne l'ensemble dispositif de coupe (50) en rotation.

12. Dispositif de traitement d'aliments (1) selon la revendication 11, dans lequel l'ensemble rotor (40) comprend : un plateau tournant (406), qui est en forme de disque, et qui est doté d'un espace de réception ; l'arbre tournant (402), inséré dans un centre du plateau tournant (406) ; et une pièce magnétique (408), disposée dans l'espace de réception, et distribuée le long d'une direction circulaire du plateau tournant (406).
